# EUROPEAN PATENT APPLICATION

(11) **EP 4 780 098 A1**
(43) Date of publication of application: **22.07.2026**
(21) Application number: 24884572.9
(22) Date of filing: 24.10.2024
(51) Int. Cl.: H04W 68/02, H04W 8/20

(54) **COMMUNICATION METHOD AND APPARATUS**

(30) Priority: 03.11.2023 CN 202311464456
(71) Applicant: HUAWEI TECHNOLOGIES CO., LTD., Shenzhen, Guangdong 518129 (CN)
(72) Inventor: HAN, Zhilin, Shenzhen, Guangdong 518129 (CN); XU, Yishan, Shenzhen, Guangdong 518129 (CN)
(74) Representative: MERH-IP Matias Erny Reichl Hoffmann Patentanwälte PartG mbB
(86) International application number: PCT/CN2024/127122
(87) International publication number: WO 2025/092568

(57) **Abstract**

This application provides a communication method and apparatus, and relates to the field of communication technologies. The method includes: An access network device receives first information from a core network device, where the access network device covers a first area, the first information is used to trigger the access network device to page a terminal device, the terminal device is located in a second area, and the first area is different from the second area. The access network device pages the terminal device based on the first information when the access network device covers the second area. In embodiments of this application, when the core network device and the terminal device are located in different areas, the access network device can first receive information from the core network device, and then page the terminal device when covering an area in which the terminal device is located, so that the access network device implements paging of the terminal device. In addition, the foregoing solution can reduce signaling overheads.

## Description

This application claims priority to Chinese Patent Application No. 202311464456.9, filed with the China National Intellectual Property Administration on November 3, 2023 and entitled "COMMUNICATION METHOD AND APPARATUS", which is incorporated herein by reference in its entirety.

### TECHNICAL FIELD

This application relates to the field of communication technologies, and more specifically, to a communication method and apparatus.

### BACKGROUND

In a non-terrestrial network (non-terrestrial network, NTN) system, a satellite may communicate with a core network device via gateway (NTN gateway), and the satellite may further communicate with a terminal device. The satellite may serve as an access network device, a link between the gateway and the satellite is a feeder link (feeder link), and a link between the satellite and the terminal device is a service link (service link).

After the access network device receives a paging (paging) request from the core network device, the access network device pages the terminal device. However, an area in which the to-be-paged terminal device is located may be different from an area in which the core network device is located. If the access network device still cannot page the terminal device before the feeder link is disconnected, the access network device fails to page the terminal device.

Therefore, how to enable the access network device to implement paging of the terminal device is an urgent problem to be resolved.

### SUMMARY

This application provides a communication method and apparatus, so that an access network device can implement paging of a terminal device.

According to a first aspect, a communication method is provided. The method may be performed by an access network device, or may be performed by a component (for example, a processor, a chip, or a chip system) in the access network device, or may be performed by a logical module or software that can implement all or some functions of the access network device. The method includes: The access network device receives first information from a core network device, where the access network device covers a first area, the first information is used to trigger the access network device to page a terminal device, the terminal device is located in a second area, and the first area is different from the second area. The access network device pages the terminal device based on the first information when the access network device covers the second area.

It should be noted that the access network device in any one of the first aspect and the implementations of the first aspect may be considered as a first access network device in embodiments of this application. The foregoing solution may also be referred to as a store and forward (store and forward, S&F) operation. The S&F operation is different from a solution in which the access network device directly performs paging after receiving the first information in a related technical solution.

According to the method in the foregoing embodiment, when the access network device does not cover the terminal device, the access network device receives, from the core network device, the first information used to trigger paging of the terminal device, and pages the terminal device when the access network device covers the terminal device, so that the access network device does not continuously page the terminal device after receiving the first information, to increase a paging success rate and reduce signaling overheads.

With reference to the first aspect, in some implementations of the first aspect, the first information includes an identifier of the terminal device and an identifier of the second area.

The access network device can accurately page the to-be-paged terminal device based on the identifier of the terminal device. The first access network device can accurately page, based on the identifier of the second area, the terminal device in the area in which the terminal device is located, and does not page the terminal device in another area. Therefore, the foregoing solution increases the success rate of paging the terminal device.

With reference to the first aspect, in some implementations of the first aspect, the method further includes: The access network device sends first data to the terminal device after paging of the terminal device is completed and when the access network device covers the second area, where the first data is data that is received by the access network device before paging of the terminal device is completed and that is to be sent to the terminal device.

Based on the foregoing solution, the core network device may send, to the access network device before paging of the terminal device is completed, downlink data to be sent to the terminal device, so that the access network device sends the downlink data to the terminal device as soon as possible after paging of the terminal device is completed, to improve efficiency of data transmission between the core network device and the terminal device.

With reference to the first aspect, in some implementations of the first aspect, the method further includes: The access network device receives second data from the terminal device. The access network device sends the second data to the core network device when the access network device covers the first area.

Based on the foregoing solution, the access network device may receive uplink data from the terminal device, and transmit the uplink data to the core network device when the access network device covers the first area. In the foregoing solution, the terminal device performs uplink transmission via the access network device.

With reference to the first aspect, in some implementations of the first aspect, the second area is a tracking area (tracking area, TA), a cell, or a geographical area.

Based on the foregoing solution, the second area may be a TA or an area with a granularity smaller than that of the TA. In this way, when the access network device covers the second area, because the granularity of the second area is small, the access network device is more likely to successfully page the terminal device. Therefore, the foregoing solution increases the success rate of paging the terminal device.

With reference to the first aspect, in some implementations of the first aspect, the method further includes: The access network device receives second information from the core network device, where the second information indicates to page the terminal device when the access network device covers the second area; and that the access network device pages the terminal device based on the first information when the access network device covers the second area includes: The access network device pages the terminal device based on the first information and the second information when the access network device covers the second area.

Based on the foregoing solution, the first access network device can perform the S&F operation based on an indication of the core network device, so that the first access network device implements paging of the terminal device, and signaling overheads are reduced.

With reference to the first aspect, in some implementations of the first aspect, the method further includes: The access network device determines, based on third information, to page the terminal device when the access network device covers the second area, where the third information includes information about the second area; and that the access network device pages the terminal device based on the first information when the access network device covers the second area includes: The access network device pages the terminal device based on the first information and the third information when the access network device covers the second area.

Based on the foregoing solution, the access network device may determine, based on the information about the second area, whether to perform the S&F operation. In the foregoing solution, the access network device can perform the S&F operation when the access network device cannot directly page the terminal device successfully, so that the first access network device successfully implements paging of the terminal device, and signaling overheads are reduced.

With reference to the first aspect, in some implementations of the first aspect, the method further includes: The access network device receives fourth information from the core network device, where the fourth information indicates a quantity of times and/or paging duration of paging the terminal device by the access network device when the access network device covers the second area; and that the access network device pages the terminal device based on the first information when the access network device covers the second area includes: The access network device pages the terminal device based on the first information and the fourth information when the access network device covers the second area.

Based on the foregoing solution, the core network device may indicate the quantity of times and/or the paging duration of paging the terminal device by the access network device when the access network device covers the second area. In this way, the access network device can page the terminal device based on the quantity of paging times and/or the paging duration, to increase the success rate of paging the terminal device by the access network device.

With reference to the first aspect, in some implementations of the first aspect, the method further includes: The access network device sends fifth information to the core network device, where the fifth information indicates that the access network device has a store and forward capability.

Based on the foregoing solution, the access network device may report, to the core network device, information indicating that the access network device has the store and forward capability. In this way, when selecting an access network device to perform the S&F operation, the core network device may consider whether the access network device has the store and forward capability, to avoid selecting an access network device that does not have the store and forward capability to perform the S&F operation, and increase the success rate of paging the terminal device by the core network device via the access network device.

With reference to the first aspect, in some implementations of the first aspect, the method further includes: The access network device sends sixth information to the core network device, where the sixth information indicates storage space of the access network device.

Based on the foregoing solution, the access network device may report the storage space of the access network device to the core network device. In this way, when selecting the access network device to perform the S&F operation, the core network device may consider the storage space of the access network device, to avoid selecting an access network device with insufficient storage space to perform the S&F operation, and increase the success rate of paging the terminal device by the core network device via the access network device.

According to a second aspect, a communication method is provided. The method may be performed by a core network device, or may be performed by a component (for example, a processor, a chip, or a chip system) in the core network device, or may be performed by a logical module or software that can implement all or some functions of the core network device. The method includes: The core network device sends first information to a first access network device, where a current coverage area of the first access network device is a first area, the first information is used to trigger the first access network device to page a terminal device, the terminal device is located in a second area, and the first information is used by the first access network device to page the terminal device when the first access network device covers the second area.

Optionally, the core network device is an access management network element, for example, an access and mobility management function (access and mobility management function, AMF) or a mobility management entity (mobility management entity, MME).

According to the method in the foregoing embodiment, when the access network device does not cover the terminal device, the access network device receives, from the core network device, the first information used to trigger paging of the terminal device, and pages the terminal device when the access network device covers the terminal device, so that the access network device does not continuously page the terminal device after receiving the first information, to increase a paging success rate and reduce signaling overheads.

With reference to the second aspect, in some implementations of the second aspect, the first information includes an identifier of the terminal device and an identifier of the second area.

The first access network device can accurately page the to-be-paged terminal device based on the identifier of the terminal device. The first access network device can accurately page, based on the identifier of the second area, the terminal device in the area in which the terminal device is located, and does not page the terminal device in another area. Therefore, the foregoing solution increases the success rate of paging the terminal device.

With reference to the second aspect, in some implementations of the second aspect, the method further includes: The core network device sends first data to the first access network device before paging of the terminal device is completed, where the first data is data to be sent to the terminal device.

Based on the foregoing solution, the core network device may send, to the access network device before paging of the terminal device is completed, downlink data to be sent to the terminal device, so that the access network device sends the downlink data to the terminal device as soon as possible after paging of the terminal device is completed, to improve efficiency of data transmission between the core network device and the terminal device.

With reference to the second aspect, in some implementations of the second aspect, the method further includes: The core network device receives second data from the first access network device.

Based on the foregoing solution, the access network device may receive uplink data from the terminal device, and transmit the uplink data to the core network device when the access network device covers the first area. In the foregoing solution, the terminal device performs uplink transmission via the access network device.

With reference to the second aspect, in some implementations of the second aspect, the second area is a TA, a cell, or a geographical area.

Based on the foregoing solution, the second area may be a TA or an area with a granularity smaller than that of the TA. In this way, when the first access network device covers the second area, because the granularity of the second area is small, the first access network device is more likely to successfully page the terminal device. Therefore, the foregoing solution increases the success rate of paging the terminal device.

With reference to the second aspect, in some implementations of the second aspect, the method further includes: The core network device sends second information to the first access network device, where the second information indicates to page the terminal device when the first access network device covers the second area.

Based on the foregoing solution, the core network device may indicate, based on configuration information of the terminal device, the first access network device to perform an S&F operation in a process of interacting with the terminal device. Based on the foregoing solution, the first access network device can perform the S&F operation based on an indication of the core network device, so that the first access network device implements paging of the terminal device, and signaling overheads are reduced.

With reference to the second aspect, in some implementations of the second aspect, the method further includes: The core network device determines, based on configuration information of the terminal device, to send the second information to the first access network device.

Based on the foregoing solution, the core network device may indicate, based on configuration information of the terminal device, the first access network device to perform the S&F operation in a process of interacting with the terminal device. Based on the foregoing solution, the first access network device can perform the S&F operation based on an indication of the core network device, so that the first access network device implements paging of the terminal device, and signaling overheads are reduced.

With reference to the second aspect, in some implementations of the second aspect, before the core network device sends the first information to the first access network device in a first time period, the method further includes: The core network device determines, based on ephemeris information, to page the terminal device via the first access network device.

Based on the foregoing solution, the core network device may determine the first access network device based on the ephemeris information, and the first access network device can cover the second area. Therefore, in the foregoing solution, the first access network device implements paging of the terminal device in the second area, and signaling overheads are reduced.

With reference to the second aspect, in some implementations of the second aspect, that the core network device determines, based on the ephemeris information, to page the terminal device via the first access network device includes: The core network device determines, based on the ephemeris information, that duration for which the first access network device moves from the first area to the second area is less than or equal to a duration threshold. The core network device determines to page the terminal device via the first access network device.

Based on the foregoing solution, the core network device may determine, based on the ephemeris information, an access network device that moves from the first area to the second area for short duration, to page the terminal device. The foregoing solution can improve efficiency of communication between the core network device and the terminal device.

With reference to the second aspect, in some implementations of the second aspect, the duration threshold is duration for which a second access network device moves from the first area to the second area, the second access network device is one of a plurality of access network devices whose current coverage area is the first area, and the first access network device is one of the plurality of access network devices; or the duration threshold is duration for which the first access network device retains the first information.

Based on the foregoing solution, the core network device can select, from the plurality of access network devices, an access network device that can cover the second area more quickly, to perform the S&F operation, to improve efficiency of communication between the core network device and the terminal device. Alternatively, the core network device can select, from the plurality of access network devices, an access network device that can retain the first information to page the terminal device, so that the access network device implements paging of the terminal device.

With reference to the second aspect, in some implementations of the second aspect, the method further includes: The core network device sends fourth information to the first access network device, where the fourth information indicates a quantity of times and/or paging duration of paging the terminal device by the first access network device when the first access network device covers the second area.

Based on the foregoing solution, the core network device may indicate the quantity of times and/or the paging duration of paging the terminal device by the access network device when the access network device covers the second area. In this way, the access network device can page the terminal device based on the quantity of paging times and/or the paging duration, to increase the success rate of paging the terminal device by the access network device.

With reference to the second aspect, in some implementations of the second aspect, the method further includes: The core network device receives fifth information from the first access network device, where the fifth information indicates that the first access network device has a store and forward capability.

Based on the foregoing solution, the access network device may report, to the core network device, information indicating that the access network device has the store and forward capability. In this way, when selecting an access network device to perform the S&F operation, the core network device may consider whether the access network device has the store and forward capability, to avoid selecting an access network device that does not have the store and forward capability to perform the S&F operation, and increase the success rate of paging the terminal device by the core network device via the access network device.

With reference to the second aspect, in some implementations of the second aspect, the method further includes: The core network device receives sixth information from the first access network device, where the sixth information indicates storage space of the first access network device.

Based on the foregoing solution, the access network device may report the storage space of the access network device to the core network device. In this way, when selecting the access network device to perform the S&F operation, the core network device may consider the storage space of the access network device, to avoid selecting an access network device with insufficient storage space to perform the S&F operation, and increase the success rate of paging the terminal device by the core network device via the access network device.

With reference to the second aspect, in some implementations of the second aspect, before the core network device sends the first information to the first access network device, the method further includes: The core network device determines that the storage space is capable of storing the data to be sent to the terminal device.

Based on the foregoing solution, when the core network device determines that the storage space of the access network device is capable of storing the data to be sent to the terminal device, the core network device pages the terminal device via the access network device. In the foregoing solution, the core network device does not select an access network device that cannot perform the S&F operation to perform the S&F operation, to increase the success rate of paging the terminal device by the core network device via the access network device.

According to a third aspect, a communication method is provided. The method may be performed by an access network device, or may be performed by a component (for example, a processor, a chip, or a chip system) in the access network device, or may be performed by a logical module or software that can implement all or some functions of the access network device. The method includes: The access network device receives first data from a core network device, where the first data is data that is received by the access network device before paging of a terminal device is completed and that is to be sent to the terminal device, the access network device covers a first area, the terminal device is located in a second area, and the first area is different from the second area. The access network device sends the first data to the terminal device after paging of the terminal device is completed and when the access network device covers the second area.

It should be noted that the access network device in any one of the third aspect and the implementations of the third aspect may be considered as a first access network device in embodiments of this application.

According to the method in the foregoing embodiment, when the access network device does not cover the terminal device, the access network device receives, from the core network device, the first information used to trigger paging of the terminal device, and pages the terminal device when the access network device covers the terminal device, so that the access network device does not continuously page the terminal device after receiving the first information, to increase a paging success rate and reduce signaling overheads.

With reference to the third aspect, in some implementations of the third aspect, the method further includes: The access network device receives first information from the core network device, where the first information is used to trigger the access network device to page the terminal device. The access network device pages the terminal device based on the first information when the access network device covers the second area.

In embodiments of this application, when the core network device and the terminal device are located in different areas, the access network device can first receive information from the core network device, and then page the terminal device when covering an area in which the terminal device is located, so that the access network device implements paging of the terminal device. In addition, the foregoing solution can reduce signaling overheads.

With reference to the third aspect, in some implementations of the third aspect, the first information includes an identifier of the terminal device and an identifier of the second area.

The access network device can accurately page the to-be-paged terminal device based on the identifier of the terminal device. The first access network device can accurately page, based on the identifier of the second area, the terminal device in the area in which the terminal device is located, and does not page the terminal device in another area. Therefore, the foregoing solution increases the success rate of paging the terminal device.

With reference to the third aspect, in some implementations of the third aspect, the method further includes: The access network device receives second data from the terminal device. The access network device sends the second data to the core network device when the access network device covers the first area.

Based on the foregoing solution, the access network device may receive uplink data from the terminal device, and transmit the uplink data to the core network device when the access network device covers the first area. In the foregoing solution, the terminal device performs uplink transmission via the access network device.

With reference to the third aspect, in some implementations of the third aspect, the second area is a TA, a cell, or a geographical area.

Based on the foregoing solution, the second area may be a TA or an area with a granularity smaller than that of the TA. In this way, when the access network device covers the second area, because the granularity of the second area is small, the access network device is more likely to successfully page the terminal device. Therefore, the foregoing solution increases the success rate of paging the terminal device.

With reference to the third aspect, in some implementations of the third aspect, the method further includes: The access network device receives second information from the core network device, where the second information indicates to page the terminal device when the access network device covers the second area; and that the access network device pages the terminal device based on the first information when the access network device covers the second area includes: The access network device pages the terminal device based on the first information and the second information when the access network device covers the second area.

Based on the foregoing solution, the first access network device can perform an S&F operation based on an indication of the core network device, so that the first access network device implements paging of the terminal device, and signaling overheads are reduced.

With reference to the third aspect, in some implementations of the third aspect, the method further includes: The access network device determines, based on third information, to page the terminal device when the access network device covers the second area, where the third information includes information about the second area; and that the access network device pages the terminal device based on the first information when the access network device covers the second area includes: The access network device pages the terminal device based on the first information and the third information when the access network device covers the second area.

Based on the foregoing solution, the first access network device may determine, based on the information about the second area, whether to perform the S&F operation. In the foregoing solution, the first access network device can perform the S&F operation when the access network device cannot directly page the terminal device successfully, so that the first access network device successfully implements paging of the terminal device, and signaling overheads are reduced.

With reference to the third aspect, in some implementations of the third aspect, the method further includes: The access network device receives fourth information from the core network device, where the fourth information indicates a quantity of times and/or paging duration of paging the terminal device by the access network device when the access network device covers the second area; and that the access network device pages the terminal device based on the first information when the access network device covers the second area includes: The access network device pages the terminal device based on the first information and the fourth information when the access network device covers the second area.

Based on the foregoing solution, the core network device may indicate the quantity of times and/or the paging duration of paging the terminal device by the access network device when the access network device covers the second area. In this way, the access network device can page the terminal device based on the quantity of paging times and/or the paging duration, to increase the success rate of paging the terminal device by the access network device.

With reference to the third aspect, in some implementations of the third aspect, the method further includes: The access network device sends fifth information to the core network device, where the fifth information indicates that the access network device has a store and forward capability.

Based on the foregoing solution, the access network device may report, to the core network device, information indicating that the access network device has the store and forward capability. In this way, when selecting an access network device to perform the S&F operation, the core network device may consider whether the access network device has the store and forward capability, to avoid selecting an access network device that does not have the store and forward capability to perform the S&F operation, and increase the success rate of paging the terminal device by the core network device via the access network device.

With reference to the third aspect, in some implementations of the third aspect, the method further includes: The access network device sends sixth information to the core network device, where the sixth information indicates storage space of the access network device.

Based on the foregoing solution, the access network device may report the storage space of the access network device to the core network device. In this way, when selecting the access network device to perform the S&F operation, the core network device may consider the storage space of the access network device, to avoid selecting an access network device with insufficient storage space to perform the S&F operation, and increase the success rate of paging the terminal device by the core network device via the access network device.

According to a fourth aspect, a communication method is provided. The method may be performed by a core network device, or may be performed by a component (for example, a processor, a chip, or a chip system) in the core network device, or may be performed by a logical module or software that can implement all or some functions of the core network device. The method includes: The core network device sends first data to a first access network device before paging of a terminal device is completed, where the first data is data to be sent to the terminal device, a current coverage area of the first access network device is a first area, the terminal device is located in a second area, the first area is different from the second area, and the first data is sent by the first access network device to the terminal device when the first access network device covers the second area.

According to the method in the foregoing embodiment, when the access network device does not cover the terminal device, the access network device receives, from the core network device, the first information used to trigger paging of the terminal device, and pages the terminal device when the access network device covers the terminal device, so that the access network device does not continuously page the terminal device after receiving the first information, to increase a paging success rate and reduce signaling overheads.

With reference to the fourth aspect, in some implementations of the fourth aspect, the method further includes: The core network device sends first information to the first access network device, where the first information is used to trigger the first access network device to page the terminal device, and the first information is used by the first access network device to page the terminal device when the first access network device covers the second area.

In embodiments of this application, when the core network device and the terminal device are located in different areas, the first access network device can first receive information from the core network device, and then page the terminal device when covering an area in which the terminal device is located, so that the access network device implements paging of the terminal device. In addition, the foregoing solution can reduce signaling overheads.

With reference to the fourth aspect, in some implementations of the fourth aspect, the first information includes an identifier of the terminal device and an identifier of the second area.

The first access network device can accurately page the to-be-paged terminal device based on the identifier of the terminal device. The first access network device can accurately page, based on the identifier of the second area, the terminal device in the area in which the terminal device is located, and does not page the terminal device in another area. Therefore, the foregoing solution increases the success rate of paging the terminal device.

With reference to the fourth aspect, in some implementations of the fourth aspect, the method further includes: The core network device receives second data from the first access network device.

Based on the foregoing solution, the access network device may receive uplink data from the terminal device, and transmit the uplink data to the core network device when the access network device covers the first area. In the foregoing solution, the terminal device performs uplink transmission via the access network device.

With reference to the fourth aspect, in some implementations of the fourth aspect, the second area is a TA, a cell, or a geographical area.

Based on the foregoing solution, the second area may be a TA or an area with a granularity smaller than that of the TA. In this way, when the first access network device covers the second area, because the granularity of the second area is small, the first access network device is more likely to successfully page the terminal device. Therefore, the foregoing solution increases the success rate of paging the terminal device.

With reference to the fourth aspect, in some implementations of the fourth aspect, the method further includes: The core network device sends second information to the first access network device, where the second information indicates to page the terminal device when the first access network device covers the second area.

Based on the foregoing solution, the first access network device can perform an S&F operation based on an indication of the core network device, so that the first access network device implements paging of the terminal device, and signaling overheads are reduced.

With reference to the fourth aspect, in some implementations of the fourth aspect, the method further includes: The core network device determines, based on configuration information of the terminal device, to send the second information to the first access network device.

Based on the foregoing solution, the core network device may indicate, based on configuration information of the terminal device, the first access network device to perform the S&F operation in a process of interacting with the terminal device. Based on the foregoing solution, the first access network device can perform the S&F operation based on an indication of the core network device, so that the first access network device implements paging of the terminal device, and signaling overheads are reduced.

With reference to the fourth aspect, in some implementations of the fourth aspect, before the core network device sends the first data to the first access network device, the method further includes: The core network device determines, based on ephemeris information, to page the terminal device via the first access network device.

Based on the foregoing solution, the core network device may determine the first access network device based on the ephemeris information, and the first access network device can cover the second area. Therefore, in the foregoing solution, the first access network device implements paging of the terminal device in the second area, and signaling overheads are reduced.

With reference to the fourth aspect, in some implementations of the fourth aspect, that the core network device determines, based on the ephemeris information, to page the terminal device via the first access network device includes: The core network device determines, based on the ephemeris information, that duration for which the first access network device moves from the first area to the second area is less than or equal to a duration threshold. The core network device determines to page the terminal device via the first access network device.

Based on the foregoing solution, the core network device may determine, based on the ephemeris information, an access network device that moves from the first area to the second area for short duration, to page the terminal device. The foregoing solution can improve efficiency of communication between the core network device and the terminal device.

With reference to the fourth aspect, in some implementations of the fourth aspect, the duration threshold is duration for which a second access network device moves from the first area to the second area, the second access network device is one of a plurality of access network devices whose current coverage area is the first area, and the first access network device is one of the plurality of access network devices; or the duration threshold is duration for which the first access network device retains the first data.

Based on the foregoing solution, the core network device can select, from the plurality of access network devices, an access network device that can cover the second area more quickly, to perform the S&F operation, to improve efficiency of communication between the core network device and the terminal device. Alternatively, the core network device can select, from the plurality of access network devices, an access network device that can retain the first information to page the terminal device, so that the access network device implements paging of the terminal device.

With reference to the fourth aspect, in some implementations of the fourth aspect, the method further includes: The core network device sends fourth information to the first access network device, where the fourth information indicates a quantity of times and/or paging duration of paging the terminal device by the first access network device when the first access network device covers the second area.

Based on the foregoing solution, the core network device may indicate the quantity of times and/or the paging duration of paging the terminal device by the access network device when the access network device covers the second area. In this way, the access network device can page the terminal device based on the quantity of paging times and/or the paging duration, to increase the success rate of paging the terminal device by the access network device.

With reference to the fourth aspect, in some implementations of the fourth aspect, the method further includes: The core network device receives fifth information from the first access network device, where the fifth information indicates that the first access network device has a store and forward capability.

Based on the foregoing solution, the access network device may report, to the core network device, information indicating that the access network device has the store and forward capability. In this way, when selecting an access network device to perform the S&F operation, the core network device may consider whether the access network device has the store and forward capability, to avoid selecting an access network device that does not have the store and forward capability to perform the S&F operation, and increase the success rate of paging the terminal device by the core network device via the access network device.

With reference to the fourth aspect, in some implementations of the fourth aspect, the method further includes: The core network device receives sixth information from the first access network device, where the sixth information indicates storage space of the first access network device.

Based on the foregoing solution, the access network device may report the storage space of the access network device to the core network device. In this way, when selecting the access network device to perform the S&F operation, the core network device may consider the storage space of the access network device, to avoid selecting an access network device with insufficient storage space to perform the S&F operation, and increase the success rate of paging the terminal device by the core network device via the access network device.

With reference to the fourth aspect, in some implementations of the fourth aspect, before the core network device sends the first data to the first access network device, the method further includes: The core network device determines that the storage space is capable of storing the data to be sent to the terminal device.

Based on the foregoing solution, when the core network device determines that the storage space of the access network device is capable of storing the data to be sent to the terminal device, the core network device pages the terminal device via the access network device. In the foregoing solution, the core network device does not select an access network device that cannot perform the S&F operation to perform the S&F operation, to increase the success rate of paging the terminal device by the core network device via the access network device.

According to a fifth aspect, a communication apparatus is provided, including a processor. The processor is configured to enable, by executing a computer program or instructions or via a processing circuit, the communication apparatus to perform the method according to any one of the first aspect and the possible implementations of the first aspect, or the communication apparatus to perform the method according to any one of the first aspect and the possible implementations of the second aspect.

In a possible implementation, the communication apparatus further includes a memory, configured to store the computer program or the instructions. Further, the processor is specifically configured to invoke and run the computer program or the computer instructions stored in the memory, to enable the processor to implement any one of the implementations of the first aspect or the second aspect.

In a possible implementation, the communication apparatus further includes a transceiver (which may also be referred to as a communication interface), and the transceiver is configured to input and/or output a signal through the communication interface. The processor is configured to control the transceiver to send and receive a signal.

According to a sixth aspect, a communication apparatus is provided, including a processing circuit (which may also be referred to as a processor) and an input/output interface (which may also be referred to as an interface circuit). The input/output interface is configured to input and/or output a signal. The processing circuit is configured to perform the method according to any one of the first aspect and the possible implementations of the first aspect. Alternatively, the processing circuit is configured to perform the method according to any one of the second aspect and the possible implementations of the second aspect.

In a possible implementation, the processor is configured to communicate with another apparatus via the interface circuit, and perform any one of the implementations of the first aspect or any one of the implementations of the second aspect. There are one or more processors.

According to a seventh aspect, a communication apparatus is provided. The communication apparatus may be a first access network device, or may be a device, a module, or the like configured to perform a function of the first access network device. The communication apparatus may be a core network device, or may be a device, a module, or the like configured to perform a function of the core network device.

In a possible implementation, the communication apparatus may include modules or units in one-to-one correspondence with the methods/operations/steps/actions described in the first aspect. The modules or units may be implemented by a hardware circuit, software, or a combination of a hardware circuit and software.

In another possible implementation, the communication apparatus may include modules or units in one-to-one correspondence with the methods/operations/steps/actions described in the second aspect. The modules or units may be implemented by a hardware circuit, software, or a combination of a hardware circuit and software.

According to an eighth aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to a ninth aspect, a computer program product is provided, including a computer program or instructions. When the computer program or the instructions are run on a computer, the method according to any one of the first aspect and the possible implementations of the first aspect is performed, or the method according to any one of the second aspect and the possible implementations of the second aspect is performed.

According to a tenth aspect, a communication apparatus is provided, including a processor. The processor is configured to be connected to a memory, and configured to invoke a program stored in the memory, to perform the method according to any one of the possible implementations of the first aspect or the method according to any one of the possible implementations of the second aspect. The memory may be located inside or outside the communication apparatus. In addition, there are one or more processors.

In an implementation, the communication apparatus according to the fifth aspect, the sixth aspect, the seventh aspect, or the tenth aspect may be a chip or a chip system.

According to an eleventh aspect, a chip apparatus is provided, including a processor, configured to invoke a computer program or computer instructions in a memory, to enable the processor to perform any one of the implementations of the first aspect or any one of the implementations of the second aspect.

Optionally, the processor is coupled to the memory through an interface.

According to a twelfth aspect, a communication system is provided. The communication system includes a first access network device and a core network device. The first access network device is configured to perform the method shown in the first aspect, and the core network device is configured to perform the method shown in the second aspect.

For descriptions of beneficial effects of any one of the fifth aspect to the twelfth aspect, refer to the descriptions of the beneficial effects of the first aspect, the second aspect, the third aspect, or the fourth aspect.

### BRIEF DESCRIPTION OF DRAWINGS

FIG. 1 is a diagram of a network architecture of a communication system to which embodiments of this application are applicable;
FIG. 2A and FIG. 2B are diagrams of network architectures of another communication system to which embodiments of this application are applicable;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a schematic flowchart of still another communication method according to an embodiment of this application;
FIG. 7 is a schematic flowchart of a method for determining a first access network device according to an embodiment of this application;
FIG. 8 is a schematic flowchart of still another communication method according to an embodiment of this application;
FIG. 9 is a block diagram of a communication apparatus according to an embodiment of this application;
FIG. 10 is a block diagram of another communication apparatus according to an embodiment of this application;
FIG. 11 is a block diagram of still another communication apparatus according to an embodiment of this application; and
FIG. 12 is a block diagram of yet another communication apparatus according to an embodiment of this application.

### DESCRIPTION OF EMBODIMENTS

The following describes technical solutions of this application with reference to the accompanying drawings.

The technical solutions provided in this application may be applied to various communication systems, for example, a 5th generation (5^{th} generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6^{th} generation, 6G) mobile communication system. The technical solutions provided in this application may be further applied to a non-terrestrial network (non-terrestrial network, NTN) system, device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system or another communication system. The NTN system may also be referred to as a satellite communication system. In addition, the non-terrestrial network system may further include a high altitude platform station (high altitude platform station, HAPS) communication system.

The NTN system may be a communication network in which an air platform or a space platform is used as a transmission device relay node or a base station. The air platform or the space platform includes but is not limited to an uncrewed aerial vehicle, a hot air balloon, an airplane, a satellite, and the like.

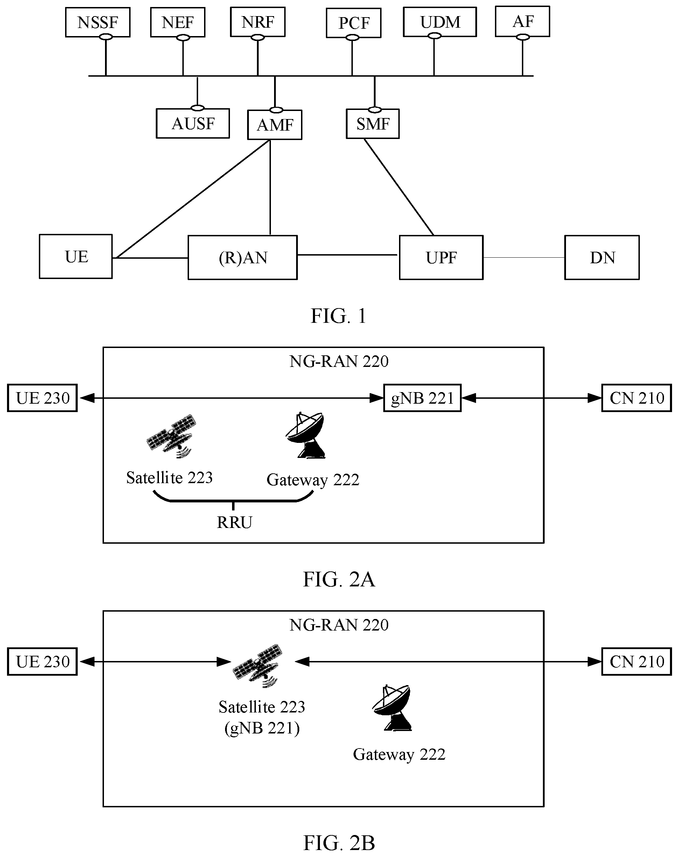

FIG. 1 is a diagram of a network architecture of a communication system to which embodiments of this application are applicable. The network architecture includes a terminal device, an access network device, an access management network element, a session management network element, a user plane network element, a policy control network element, a network slice selection network element, a network repository function network element, a network data analytics network element, a unified data management network element, a unified data repository network element, an authentication server function network element, a network capability exposure network element, an application function network element, and a data network (data network, DN) connected to an operator network. The terminal device may send service data to the data network and receive service data from the data network, via the access network device and the user plane network element.

The terminal device is a device that has a wireless transceiver function, and may be deployed on land. The terminal device may be referred to as a terminal, an access terminal, a subscriber unit, a subscriber station, a mobile station, a remote station, a remote terminal, a mobile device, a user terminal, a wireless communication device, a user agent, or a user apparatus. The terminal device may include an indoor terminal, an outdoor terminal, a handheld terminal, a wearable terminal, or a vehicle-mounted terminal. The terminal device may be deployed on water (for example, on a ship), or may be deployed in the air (for example, on an airplane, a balloon, and a satellite). The terminal device may communicate with a core network through a radio access network (radio access network, RAN), and exchange voice and/or data with the RAN. The terminal device may be a mobile phone (mobile phone), a tablet computer (Pad), a cellular phone, a cordless phone, a session initiation protocol (session initiation protocol, SIP) phone, an intelligent terminal, a wireless local loop (wireless local loop, WLL) station, a personal digital assistant (personal digital assistant, PDA), a computer having a wireless transceiver function, a handheld device having a wireless communication function, a compute device, another processing device connected to a wireless modem, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a vehicle-mounted device, a wireless terminal in transportation security (transportation safety), a wireless terminal in smart city (smart city), a wireless terminal in smart home (smart home), an uncrewed aerial vehicle (unmanned aerial vehicle or uncrewed aerial vehicle, UAV), an uncrewed aerial vehicle controller, or the like. An application scenario is not limited in embodiments of this application. For example, the terminal device may be a terminal device in a 5G network, a terminal device in a future evolved public land mobile communication network (public land mobile network, PLMN), or a terminal device in an NTN. Alternatively, the terminal device may be an end device, a logical entity, or a smart device; or may be a communication device such as a server, a gateway, a base station, or a controller; or may be an internet of things (internet of things, IoT) device such as a sensor, an electricity meter, or a water meter. The terminal device may also be referred to as user equipment (user equipment, UE). A specific technology, a device form, and a name used for the terminal device are not limited in embodiments of this application.

The access network device is a device that is in a network and that is configured to connect the terminal device to a wireless network. The access network device may be a node in the radio access network, may also be referred to as a base station, and may also be referred to as a (radio) access network ((radio) access network, (R)AN) node (or device). For ease of description, the RAN is sometimes used below to represent the access network device. It may be understood that the RAN may alternatively be an AN. In this application, the access network device may be a satellite.

The access network device may include an evolved NodeB (NodeB, eNB, or e-NodeB, evolved NodeB) in a long term evolution (long term evolution, LTE) system or an LTE-advanced (LTE-Advanced, LTE-A) system, for example, a conventional macro base station eNB and a micro base station eNB in a heterogeneous network scenario; or may include a next generation NodeB (next generation NodeB, gNB) in a 5G or NR system; or may further include a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB, or a home NodeB, HNB), a baseband unit (baseband unit, BBU), a baseband pool (BBU pool), a Wi-Fi access point (access point, AP), or the like; or may further include a central unit (central unit, CU) and a distributed unit (distributed unit, DU) in a cloud access network (cloud radio access network, CloudRAN) system. This is not limited in embodiments of this application. In a split deployment scenario in which the access network device includes the CU and the DU, the CU supports a radio resource control (radio resource control, RRC) protocol, a packet data convergence protocol (packet data convergence protocol, PDCP), a service data adaptation protocol (service data adaptation protocol, SDAP), and the like; and the DU mainly supports a radio link control (radio link control, RLC) layer protocol, a medium access control (medium access control, MAC) layer protocol, and a physical layer protocol.

The access management network element may also be referred to as an access and mobility management device, an access and mobility management function entity, an access and mobility management function network element, a mobility management device, a mobility management network element, or a mobility management entity. The access management network element is mainly configured to perform access control and mobility management on the terminal device in the mobile network. For example, the access management network element may provide an attach procedure, a tracking area update procedure, a non-access stratum (non-access stratum, NAS) message of the terminal, complete registration management, connection management, reachability management, tracking area list (tracking area list, TA list) allocation, lawful interception, access authorization, authentication, session management network element selection, mobility status transition management, and the like, and can send a transparent routing session management (session management, SM) message to the session management network element. In a network framework of the LTE system, the access management network element may be an access and mobility management function in the MME. In a 5th generation (5th generation, 5G) communication system, the access management network element may be an AMF. In a future communication system (for example, a 6G communication system), the mobility management network element may still be an AMF network element, or may have another name. This is not limited in this application. When the access management network element is an AMF network element, the AMF may provide an Namf service.

The session management network element may also be referred to as a session management device. The session management network element is mainly configured for session and bearer management in the mobile network, for example, session establishment, modification, and release. For example, the session management network element may allocate an internet protocol (internet protocol, IP) address to the terminal device, select a user plane network element that provides a packet forwarding function, and control quality of service (quality of service, QoS). In a 4G network, the session management network element may be a packet data network gateway (packet data network gateway, PGW). In the 5G communication system, the session management network element may be a session management function (session management function, SMF). In the future communication system (for example, the 6G communication system), the session management network element may still be an SMF network element, or may have another name. This is not limited in this application. When the session management network element is an SMF network element, the SMF may provide an Nsmf service.

The user plane network element may also be referred to as a user plane device. The user plane network element is mainly configured to process a user packet, for example, perform forwarding, charging, or lawful interception. For example, the user plane network element may be configured to perform functions such as routing and forwarding of user plane data, threshold control, traffic monitoring, and validation. The user plane network element may be further configured to manage a UE IP address, manage core network (core network, CN) tunnel information, and the like. The user plane network element may receive user data from the DN, and transmit the user data to the terminal device via the access network device. The user plane network element may further receive user data from the terminal device via the access network device, and forward the user data to the DN. A transmission resource and a scheduling function that are used to provide a service for the terminal device in the user plane network element are managed and controlled by the session management network element. The user plane network element may also be referred to as a protocol data unit (protocol data unit, PDU) session anchor (PDU session anchor, PSA). In the 5G communication system, the user plane network element may be a user plane function (user plane function, UPF). In the future communication system (for example, the 6G communication system), the user plane network element may still be a UPF network element, or may have another name. This is not limited in this application.

The policy control network element includes a user subscription data management function, a policy control function, a charging policy control function, quality of service (quality of service, QoS) control, and the like. In the 4G network, the policy control network element may be a policy and charging rules function unit (policy and charging rules function, PCRF). In the 5G communication system, the policy control network element may be a policy control function (policy control function, PCF). In the future communication system (for example, the 6G communication system), the policy control network element may still be a PCF network element, or may have another name. This is not limited in this application.

The network slice selection function network element is mainly configured to select a proper network slice for a service of the terminal device. In the 5G communication system, the network slice selection network element may be a network slice selection function (network slice selection function, NSSF) network element. In the future communication system (for example, the 6G communication system), the network slice selection network element may still be an NSSF network element, or may have another name. This is not limited in this application.

The network repository function network element is mainly configured to provide registration and discovery functions of a network element or a service provided by the network element. In the 5G communication system, the network repository function network element may be a network repository function (network repository function, NRF). In the future communication system (for example, the 6G communication system), the network repository function network element may still be an NRF network element, or may have another name. This is not limited in this application.

The network data analytics network element may collect data from each network function (network function, NF), for example, the policy control network element, the session management network element, the user plane network element, the access management network element, and the application function network element (via the network capability exposure function network element), and perform analysis and prediction. In the 5G communication system, the network data analytics network element may be a network data analytics function (network data analytics function, NWDAF). In the future communication system (for example, the 6G communication system), the network data analytics network element may still be an NWDAF network element, or may have another name. This is not limited in this application.

The unified data management network element may also be referred to as a unified data management device, a data management device, a unified data management entity, or the like. The unified data management network element is mainly configured to manage configuration information of the terminal device, for example, an identifier of the terminal device, access authentication information, registration information, and mobility management information. In the 4G network, the unified data management network element may be a home subscriber server (home subscriber server, HSS). In the 5G communication system, the unified data management network element may be a unified data management (unified data management, UDM). In the future communication system (for example, the 6G communication system), the unified data management network element may still be a UDM network element, or may have another name. This is not limited in this application.

The unified data repository network element may also be referred to as a user database device, a user database entity, a user database network element, or the like. The unified data repository network element is mainly configured to store structured data information, such as configuration information and policy information, and configured to store network data or service data defined in a standard format. In the 5G communication system, the unified data repository network element may be a unified data repository (unified data repository, UDR). In the future communication system (for example, the 6G communication system), the unified data repository network element may still be a UDR network element, or may have another name. This is not limited in this application.

The authentication server function network element is mainly configured to perform security authentication on the terminal device. In the 5G communication system, the authentication server function network element may be an authentication server function (authentication server function, AUSF). In the future communication system (for example, the 6G communication system), the authentication server function network element may still be an AUSF network element, or may have another name. This is not limited in this application.

The network capability exposure network element may expose some functions of the network to an application in a controlled manner. In the 5G communication system, the network capability exposure network element may be a network capability exposure function (network exposure function, NEF). In the future communication system (for example, the 6G communication system), the network capability exposure network element may still be an NEF network element, or may have another name. This is not limited in this application.

The application function network element may provide service data of various applications for a control plane network element in a communication network of an operator, or obtain data information and control information of a network from a control plane network element in a communication network. In the 5G communication system, the application function network element may be an application function (application function, AF). In the future communication system (for example, the 6G communication system), the application function network element may still be an AF network element, or may have another name. This is not limited in this application. For example, the application function network element may also be referred to as an application server or a service server. In addition, the application function network element may be deployed by the operator network, or may be deployed by a third party.

The data network is mainly configured to provide a data transmission service for the terminal device. The data network may be a private network, for example, a local area network; or may be a public data network (public data network, PDN), for example, the internet (Internet); or may be a dedicated network jointly deployed by operators, for example, a configured IP multimedia core network subsystem (IP multimedia core network subsystem, IMS) service. The data network may alternatively come from the third party.

It should be understood that the foregoing network elements or the functions may be network elements in a hardware device, software functions running on dedicated hardware, or virtualized functions instantiated on a platform (for example, a cloud platform). Optionally, the foregoing network elements or functions may be implemented by one device, may be jointly implemented by a plurality of devices, or may be a functional module in one device. This is not specifically limited in embodiments of this application.

It should be further understood that the foregoing names are defined merely for distinguishing between different functions, and should not constitute any limitation on this application. This application does not exclude a possibility that another name is used in the 5G network and another future network. For example, in the 6G network, some or all of the foregoing networks may still use terms in 5G, or may use other names. A name of an interface between the network elements in FIG. 1 is merely an example. In a specific implementation, the name of the interface may be another name. This is not specifically limited in this application. In addition, names of messages (or signaling) transmitted between the foregoing network elements are also merely examples, and do not constitute any limitation on functions of the messages.

It should be noted that the foregoing "network element" may also be referred to as an entity, a device, an apparatus, a module, or the like. This is not particularly limited in this application. In addition, in this application, for ease of understanding and description, the description of the "network element" is omitted in some descriptions. For example, the PCF network element is briefly referred to as a PCF. In this case, the "PCF" should be understood as the PCF network element or a PCF entity. Descriptions of same or similar cases are omitted below.

In the standard protocols of R15 to R18, the 3rd generation partnership project (3^{rd} generation partnership project, 3GPP) defines a series of architecture systems and features for satellites. A communication architecture in which a satellite serves as an access network device is mainly applied to a remote area. A cellular network may not cover the remote area. Therefore, the satellite serves as the access network device to assist a terminal device in communication. In some other scenarios, instant data transmission may be implemented by using a low-latency feature of a low-orbit satellite.

A moving trajectory of the satellite may be predetermined, for example, the moving trajectory of the satellite is represented by ephemeris (ephemeris) information of the satellite. The ephemeris information may include information such as an altitude of a moving orbit, an included angle between the moving orbit and an equator plane, and a moving speed. A spatial orientation of the satellite at specific time may be known based on the ephemeris information of the satellite.

FIG. 2A and FIG. 2B are diagrams of network architectures of another communication system to which embodiments of this application are applicable.

Refer to FIG. 2A. UE 230 accesses a CN 210 through a next generation radio access network (next generation radio access network, NG-RAN) 220. The NG-RAN 220 includes a gNB 221, a gateway (gateway) 222, and a satellite 223. In the NG-RAN 220, the gNB 221 serves as a base station, and the satellite 223 serves as a transport layer node (transport layer node, TLN) or as a relay (relay). In a process of data transmission between the CN 210 and the UE 230, the satellite 223 does not process data. Therefore, the satellite 223 in FIG. 2A may be referred to as a transparent satellite (transparent satellite).

Refer to FIG. 2B. UE 230 accesses a CN 210 through an NG-RAN 220. A difference from FIG. 2A is that a satellite 223 is configured to connect the UE 230 and the CN 210 and is further configured to process data. In this case, the satellite 223 has a function of a base station (for example, a gNB 221). FIG. 2B may also be considered as a gNB on board (gNB on board) solution, and the UE 230 is connected to the CN 210 via the satellite base station and a gateway 222. The satellite 223 in FIG. 2B may be referred to as a regenerative satellite (regenerative satellite).

It should be noted that the gNB in FIG. 2A and FIG. 2B may be replaced with an eNB. Embodiments of this application may be applied to a 5G network, a 4G network, and another communication system.

As described above, how to enable the access network device to implement paging of the terminal device is an urgent problem to be resolved.

It may be understood that, the term "and/or" in this specification merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects.

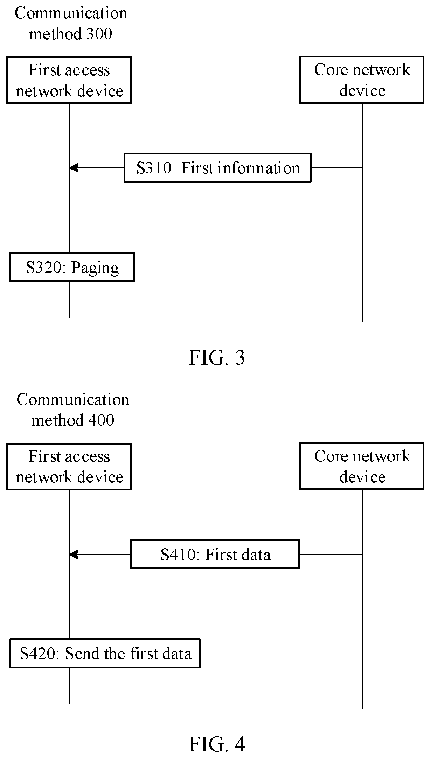

FIG. 3 is a schematic flowchart of a communication method 300 according to an embodiment of this application. According to the method 300, an access network device can implement paging of a terminal device. The method 300 may be applied to the network architecture shown in FIG. 1 or FIG. 2A and FIG. 2B. The following describes an embodiment of the method 300 with reference to FIG. 3.

S310: A first access network device receives first information from a core network device.

That the first access network device may cover a first area may be understood as that a current coverage area of the first access network device is the first area.

The first information may be used to trigger the first access network device to page a terminal device.

The terminal device may be located in a second area, and the first area is different from the second area, which may be specifically replaced with the following: The terminal device is located outside the first area, or the terminal device is located outside the current coverage area of the first access network device (for example, outside a signal coverage area or a beam coverage area). Further, that the first access network device covers the second area in S320 may be replaced with the following: The first access network device covers a location of the terminal device (which may be briefly referred to as covering the terminal device subsequently), or the terminal device is located in a coverage area of the first access network device. This is not limited in this application.

Correspondingly, the core network device sends the first information to the first access network device. The core network device is configured to perform access and mobility management on the terminal device, for example, an AMF or an MME. This is not limited in this application.

It may be understood that if the core network device pages the terminal device via the access network device, at least one access network device may receive a paging message from the core network device. The first access network device may be any one of the at least one access network device. This is not limited in this application. For example, there is an intersection between current coverage areas of a RAN #1, a RAN #2, and a RAN #3 and the first area. In other words, the RAN #1, the RAN #2, and the RAN #3 all have a feeder connection to the core network device. The RAN #1 and the RAN #2 may cover the second area after a period of time, that is, there is an intersection between current coverage areas of the RAN #1 and the RAN #2 and the second area. In other words, the RAN #1 and the RAN #2 cover the terminal device. In this case, the RAN #1 and the RAN #2 may page the terminal device.

It should be noted that the first access network device may receive the first information from the core network device over an inter-satellite link (inter-satellite link, ISL). For example, after receiving the first information from the core network device, the RAN #2 may send the first information to the RAN #1 over an ISL between the RAN #2 and the RAN #1.

It should be noted that the first access network device may serve as a gNB on board (gNB on board). To be specific, the first access network device is located on a satellite, and the first access network device moves or flies based on a predetermined trajectory, to cover different areas. For example, when the first access network device receives the first information from the core network device, the first access network device covers the first area. In other words, when the current coverage area of the first access network device is the first area, the core network device sends the first information to the first access network device. It may be understood that, as the first access network device moves or flies, a location of the first access network device also changes, and the first access network device does not always cover the first area, but may cover another area. For example, when the first access network device moves or flies to another location, the first access network device may cover the second area, that is, an area in which the terminal device is located.

That the first area is different from the second area may be understood as that the first area and the second area are different areas (for example, TAs, cells, or geographical areas). For example, the first area is a TA #1, the second area is a TA #2, and the TA #1 and the TA #2 are different; or may be understood as that there is no intersection between the first area and the second area. For example, the first area is a TA #1, the second area is a cell #1, and there is no intersection between the first area and the second area.

Specifically, the first area may be a TA, or may be another area (for example, a cell or a geographical area). The second area may be a TA, or may be another area (for example, a cell or a geographical area). In an NTN scenario, the TA may also be referred to as an NTN TA. For an embodiment in which the first area and/or the second area are/is other areas/another area, refer to the following descriptions. Details are not described herein.

It should be noted that this embodiment of this application may be applied to a discontinuous feeding scenario. Specifically, in the discontinuous feeding scenario, when a feeder link between the access network device and a gateway of the core network device is not disconnected (or remains connected), a service link between the access network device and the terminal device is disconnected; or when a service link between the access network device and the terminal device is not disconnected, a feeder link between the access network device and a gateway of the core network device is disconnected (which may be understood as no communication available). The discontinuous feeding scenario is a concept relative to a continuous feeding scenario. In the continuous feeding scenario, the access network device may be simultaneously connected to the feeder link and the service link.

For example, when covering the first area, the first access network device can set up the feeder link with the gateway of the core network device; and when covering the second area, the first access network device can set up the service link with the terminal device. It may be understood that when covering the first area (or is connected to the feeder link, or is connected to the core network device), the first access network device does not cover the second area (or is not connected to the service link, or is not connected to the terminal device); or when covering the second area (or is connected to the service link, or is connected to the terminal device), the first access network device does not cover the first area (or is not connected to the feeder link, or is not connected to the core network device).

"Coverage" in embodiments of this application may be understood as signal coverage. For example, that the first access network device covers the first area may be understood as that a signal of the first access network device covers the first area. A person skilled in the art may understand that "coverage" may be full signal coverage, or may be partial signal coverage. For example, that the first access network device covers the first area may be understood as that a signal coverage area of the first access network device and the first area have an intersection, or may be understood as that a signal beam of the first access network device reaches the first area.

The first information may be any information. For example, the first information may be a paging message (paging message) or a paging request instruction. Specifically, in a process in which the first access network device pages the terminal device, the first access network device may send a paging message to the terminal device. The paging message may be the same as or different from the first information.

When the first information is a paging message, for differentiation, the paging message sent by the core network device to the first access network device is referred to as a first paging message below, and the paging message sent by the first access network device to the terminal device is referred to as a second paging message below. It may be understood that the first paging message may be different from the second paging message. For example, the second paging message may be an RRC message.

For example, the core network device may send the first information to the first access network device via the gateway. For a terminal device in a connection management idle (connection management idle, CM-IDLE) state, the core network device (for example, the AMF) may initiate paging (for example, send a paging message) to the terminal device via the first access network device, so that the terminal device can return from the CM-IDLE state to a CM-connected (connected) state, and the core network device can perform data transmission with the terminal device. In other words, the first access network device pages the terminal device (for example, sends the paging message to the terminal device), so that the terminal device can enter a state of receiving and sending data.

The first information may be carried in an N2 message. In other words, the N2 message may carry the first information.

In an optional implementation, before S310, the method 300 further includes: The core network device receives a service request from an application server.

The service request may be used to request to send data to the terminal device. The service request may carry an identifier of the terminal device, for example, a subscriber permanent identifier (subscription permanent identifier, SUPI) or a subscription concealed identifier (subscription concealed identifier, SUCI). The service request may further carry data to be sent to the terminal device. In addition, the service request may further carry indication information, where the indication information is used to trigger the core network device to notify the access network device to: cache, when receiving downlink signaling or data of the terminal device, information corresponding to the downlink signaling or data (for example, the downlink signaling is the first paging message, and information corresponding to the first paging message may be the first paging message or the second paging message) until the terminal device is located in a coverage area of the access network device, and then send the cached information to the terminal device (where a related operation such as caching of the access network device may be briefly referred to as an S&F operation). Specifically, the indication information may indicate that the data to be sent to the terminal device belongs to an S&F type. For example, the indication information is a service type of the data, and the service type is the S&F type.

Correspondingly, after receiving the service request from the application server, the core network device may send the first information to the first access network device, to perform S310. It should be noted that the core network device may be triggered by other information or another device to send the first information to the first access network device. This is not limited in this application.

S320: The first access network device pages the terminal device based on the first information when the first access network device covers the second area.

For example, when receiving the first information, the first access network device does not cover the location of the terminal device, and may store the first information (or may be partial information in the first information), or generate the second paging message based on the first information and store the second paging message; and page the terminal device based on the stored information when the first access network device covers the location of the terminal device. For example, the paging message is generated based on the stored first information, and the paging message is sent, or the stored second paging message is sent. This is not limited in this application.

For the first access network device covering the second area, refer to the related descriptions about coverage of the first area in S310. Details are not described herein again.

With reference to the foregoing case in which the first access network device is the gNB on board, the first access network device covers the first area when receiving the first information, and after the satellite moves for a period of time, the first access network device successfully covers the second area. In this case, the first access network device pages the terminal device.

According to the method in the foregoing embodiment, when the first access network device does not cover the terminal device, the first access network device receives, from the core network device, the first information used to trigger paging of the terminal device, and pages the terminal device when the first access network device covers the terminal device, so that the access network device does not continuously page the terminal device after receiving the first information, to increase a paging success rate and reduce signaling overheads.

Optionally, in another implementation scenario of the foregoing embodiment, the first information includes an identifier of the terminal device and an identifier of the second area.

The identifier of the terminal device may be a temporary mobile subscriber identity (temporary mobile subscriber identity, TMSI). However, the identifier of the terminal device is not limited in this application, and may be another identifier, for example, a globally unique temporary UE identity (globally unique temporary UE identity, GUTI).

The second area may be a TA, a cell (cell), or a geographical area.

Further, when the second area is a geographical area, the identifier of the second area may be longitude and latitude information of the geographical area, or may be other coordinate information. The geographical area may be smaller than a range of the cell. When the second area is a cell, the identifier of the second area may be a cell identity (cell identity, cell ID). When the second area is a TA, the identifier of the second area may be a tracking area identity (tracking area identity, TAI). For example, in an NTN system, the identifier of the second area may be an NTN TAI. The identifier of the second area varies with the second area. For details, refer to the following embodiments. Details are not described herein.

It should be noted that there may be one or more TAIs. In a case of a plurality of TAIs, the TAI may also be referred to as a TAI list (list). In the case of the plurality of TAIs, the plurality of TAIs may all cover a terminal device corresponding to ULI. Similarly, there may be one or more cell identities, and there may be one or more pieces of coordinate information.

Further, the first access network device may page the terminal device based on the identifier of the terminal device and the identifier of the second area when the first access network device covers the second area, to increase the success rate of paging the terminal device.

In an example, the first information may include location information (for example, UE location information, ULI) of the terminal device, the ULI may include at least one of the TAI, the cell identity, or the coordinate information, and the location information of the terminal device may include the identifier of the second area. For example, assuming that the ULI includes the TAI and the cell identity, the identifier of the second area may be the TAI or the cell identity.

In another example, the identifier of the second area is the location information of the terminal device. This is not limited in this application.

The ULI of the terminal device may be from the terminal device. For example, the ULI may be sent by the terminal device to the core network device in a previous process of data transmission between the terminal device and the core network device. Alternatively, the ULI may be sent by the terminal device to the core network device in a process of registering with the core network device.

Optionally, in another implementation scenario of the foregoing embodiment, the first information includes an identifier of the terminal device.

Further, the first access network device may obtain, based on the identifier of the terminal device, location information (which may include an identifier of the second area) of the terminal device stored in the first access network device, and page the terminal device when the first access network device covers a location (for example, the second area) corresponding to the location information of the terminal device, to increase a success rate of paging the terminal device.

Optionally, in another implementation scenario of the foregoing embodiment, the method 300 further includes: The first access network device receives second information from the core network device, where the second information indicates to page the terminal device when the first access network device covers the second area.

Further, S320 may include: The first access network device pages the terminal device based on the first information and the second information when the first access network device covers the second area.

Correspondingly, the method 300 further includes: The core network device sends the second information to the first access network device.

The second information may be understood as an S&F indicator (indicator) or a trigger (trigger). Specifically, the core network device may send the second information to the first access network device, to indicate the first access network device to perform the S&F operation.

In an example, the second information and the TAI may be carried in a same message. In this way, the message may indicate the first access network device to perform the S&F operation. When the first access network device covers the second area indicated by the TAI, the first access network device pages the terminal device. In another example, the second information may be carried in the ULI. In this way, the ULI may indicate the first access network device to page the terminal device when the first access network device covers the second area indicated by the ULI. For example, the ULI may include the TAI, the cell identity, and the second information.

Based on the foregoing solution, the first access network device can perform the S&F operation based on an indication of the core network device, and perform the S&F operation for different terminal devices more accurately, to avoid a problem of delayed paging.

Optionally, in another implementation scenario of the foregoing embodiment, the method 300 further includes: The core network device determines, based on configuration information of the terminal device, to send the second information to the first access network device.

The configuration information of the terminal device may indicate that the S&F operation needs to be applied to the terminal device. In this way, the core network device may determine, based on the configuration information, to send the second information to the first access network device, that is, indicate the first access network device to perform the S&F operation.

For example, the configuration information may include subscription information, and the subscription information may indicate that the terminal device subscribes to an S&F service, or indicate that the S&F operation needs to be used for the terminal device.

For another example, the configuration information may include a radio access type (radio access type, RAT) of the terminal device, the configuration information may include an S&F RAT, and the S&F RAT indicates that the S&F operation needs to be applied to the terminal device. This application does not limit the configuration information of the terminal device to include only the subscription information or the RAT. The configuration information of the terminal device may alternatively be other information. For example, the configuration information may include information provided by the terminal device when the terminal device accesses a network (for example, information in a registration procedure, or information that is exchanged with the access network device last time). In an example, when the information in the registration procedure includes information indicating that the S&F operation needs to be used for the terminal device, the core network device may determine to send the second information to the first access network device. In another example, if the S&F operation is performed when the terminal device interacts with the access network device last time, the core network device may determine to send the second information to the first access network device.

For another example, the configuration information may include the location information of the terminal device, and the core network device may determine, based on the location information of the terminal device and ephemeris information of the first access network device, to send the second information to the first access network device. In an example, when the first access network device cannot simultaneously cover the first area and the second area in which the terminal device is located, the core network device determines to send the second information to the first access network device, to indicate the first access network device to perform the S&F operation. In another example, when the location of the terminal device is far away from the core network device, if the first access network device cannot be simultaneously connected to the feeder link and the service link, the core network device determines to send the second information to the first access network device, to indicate the first access network device to perform the S&F operation.

Based on the foregoing solution, the core network device may indicate, based on the configuration information of the terminal device, the first access network device to perform the S&F operation in a process of interacting with the terminal device. In the foregoing solution, the first access network device can perform the S&F operation in a timely manner based on an indication of the core network device, to increase the success rate of paging the terminal device and reduce signaling overheads.

Optionally, in another implementation scenario of the foregoing embodiment, the method 300 further includes: The first access network device determines, based on third information, to page the terminal device when the first access network device covers the second area.

The third information indicates the location of the terminal device, and may include information about the second area, for example, the identifier of the second area, and may also include the location information of the terminal, for example, the ULI. This is not limited in this application.

Further, S320 may include: The first access network device pages the terminal device based on the first information and the third information when the first access network device covers the second area.

Different from the foregoing solution about the second information, in this solution, the first access network device determines whether the S&F operation needs to be performed.

The information about the second area may be understood as the location information of the terminal device. The information about the second area may be specifically identification information of the second area, for example, information about the TA, information about the cell, or the geographical location information (for example, location information of coordinates). In this way, when the second area is far away from the first area, the first access network device may determine to perform the S&F operation.

In an example, when the first access network device receives the first information, the first access network device may determine, based on the information about the second area and location information of the gateway of the core network device, whether to page the terminal device when the first access network device covers the second area. For example, if the first access network device determines that the first access network device cannot be connected to the gateway of the core network device when covering the second area, the first access network device performs the S&F operation on the terminal device. For another example, if the first access network device determines that the first access network device can be connected to the gateway of the core network device when covering the second area, the S&F operation is not performed.

In other words, when the first access network device receives the first information, the first access network device may determine, based on the information about the second area and the feeder connection between the first access network device and the core network device, whether to page the terminal device when the first access network device covers the second area. For example, if the first access network device determines that the feeder connection between the first access network device and the core network device is disconnected when the first access network device covers the second area, the first access network device determines to perform the S&F operation. For another example, if the first access network device determines that the feeder connection between the first access network device and the core network device is not disconnected when the first access network device covers the second area, the S&F operation is not performed.

In another example, when the first access network device receives the first information, the first access network device may determine, based on the information about the second area, whether the service connection between the first access network device and the terminal device is available, to determine whether to page the terminal device when the first access network device covers the second area. For example, when the first access network device covers the first area, if the first access network device determines that the service connection between the first access network device and the terminal device is unavailable, the first access network device determines to perform the S&F operation. For another example, when the first access network device covers the first area, if the first access network device determines that the service connection between the first access network device and the terminal device is available, the first access network device determines not to perform the S&F operation.

Based on the foregoing solution, the first access network device may determine, based on the third information, whether to perform the S&F operation. In the foregoing solution, the first access network device can perform the S&F operation when the first access network device cannot directly page the terminal device successfully, to increase the success rate of paging the terminal device and reduce signaling overheads.

In some optional implementations, that the first access network device determines, based on the third information, to page the terminal device when the first access network device covers the second area includes: The first access network device determines, based on the information about the second area, that the first access network device cannot simultaneously cover the first area and the second area, or determines, based on the information about the second area, that the first area is different from the second area. The first access network device determines to page the terminal device when the first access network device covers the second area.

The foregoing describes some implementations of how the first access network device determines whether to perform the S&F operation. The following describes some implementations of how the core network device determines that the first access network device performs the S&F operation. In other words, the following describes an embodiment of how the core network device selects the first access network device from a plurality of access network devices to perform the S&F operation.

Optionally, in another implementation scenario of the foregoing embodiment, before S310, the method 300 further includes: The core network device determines, based on ephemeris information, to page the terminal device via the first access network device.

Ephemeris (ephemeris) information of a satellite may represent a moving trajectory of the satellite. The ephemeris information may include information such as an altitude of a moving orbit, an included angle between the moving orbit and an equator plane, and a moving speed. A spatial orientation of the satellite at specific time may be known based on the ephemeris information of the satellite.

For example, the core network device determines, based on the ephemeris information, an access network device that can cover the second area. If the ephemeris information of the access network device includes the identifier of the second area, the core network device may determine that the access network device can cover the second area. If the ephemeris information of the access network device does not include the identifier of the second area, the core network device may determine that the access network device cannot cover the second area.

If there are a plurality of access network devices that can cover the second area, the core network device may select one of these access network devices as the first access network device. There may be a plurality of manners of determining the first access network device from the plurality of access network devices. For example, one of the plurality of access network devices may be randomly selected as the first access network device. This is not limited in this application. The first access network device may be determined from the plurality of access network devices in another manner.

Based on the foregoing solution, the core network device may determine the first access network device based on the ephemeris information, and the first access network device can cover the second area. Therefore, in the foregoing solution, the first access network device implements paging of the terminal device in the second area, and signaling overheads are reduced.

Optionally, in another implementation scenario of the foregoing embodiment, that the core network device determines, based on the ephemeris information, to page the terminal device via the first access network device includes: The core network device determines, based on the ephemeris information, that duration for which the first access network device moves from the first area to the second area is less than or equal to a duration threshold. The core network device determines to page the terminal device via the first access network device.

The duration threshold may be preset, or has another specific meaning. It may be understood that the duration for which the first access network device moves from the first area to the second area is less than or equal to the duration threshold, to indicate that the duration for which the first access network device moves from the first area to the second area is short.

Based on the foregoing solution, the core network device may determine, based on the ephemeris information, an access network device that moves from the first area to the second area for short duration, to page the terminal device. The foregoing solution can improve efficiency of communication between the core network device and the terminal device.

Optionally, in another implementation scenario of the foregoing embodiment, the duration threshold is duration for which a second access network device moves from the first area to the second area, the second access network device is one of a plurality of access network devices whose current coverage area is the first area, and the first access network device is one of the plurality of access network devices; or the duration threshold is duration for which the first access network device retains the first information.

In addition to being preset, the duration threshold may further have another specific meaning.

Specifically, the duration threshold may be duration for which another access network device (that is, the second access network device) moves from the first area to the second area. The second access network device may be any one of the plurality of access network devices.

It may be understood that the second access network device is different from the first access network device. For example, the second access network device may be an access network device that moves from the first area to the second area for longest duration in the plurality of access network devices. In this way, the first access network device is at least not a slowest access network device that moves from the first area to the second area. For another example, the second access network device may be an access network device that moves from the first area to the second area for second shortest duration in the plurality of access network devices. In this way, the first access network device is a fastest access network device that moves from the first area to the second area.

Further, the core network device may randomly select two of the plurality of access network devices, use an access network device that moves from the first area to the second area for shorter duration in the two access network devices as the first access network device, and use an access network device that moves from the first area to the second area for longer duration in the two access network devices as the second access network device. Alternatively, the core network device may perform polling on the plurality of access network devices, and determine an access network device that moves from the first area to the second area for shortest duration in the plurality of access network devices as the first access network device.

The duration threshold may be duration for which the first access network device retains the first information. In this way, when covering the second area, the first access network device still stores the first information, and therefore can page the terminal device based on the first information when covering the second area.

In some other embodiments, the duration threshold may be duration for which the first access network device retains the second paging message. The second paging message is an RRC message to be sent to the terminal device, and the second paging message is generated by the first access network device based on the first information.

The duration for which the first access network device retains the first information may be indicated by a retention period (retention period). The retention period may be configured based on a granularity of the access network device. In other words, one or more retention periods are configured for each access network device. In this way, the core network device may determine, based on configuration information of the access network device, the duration (that is, the duration threshold) for which the access network device retains the first information, and when the duration for which the access network device moves from the first area to the second area is less than or equal to the duration threshold, determine that the access network device is the first access network device.

It should be noted that the retention period may alternatively be configured based on a granularity of the terminal device. In other words, one or more retention periods may be configured for each terminal device. In this way, the core network device may determine, based on the configuration information (for example, the subscription information) of the terminal device, the duration (that is, the duration threshold) for which the access network device retains the first information, and when the duration for which the access network device moves from the first area to the second area is less than or equal to the duration threshold, determine that the access network device is the first access network device. The retention period may also be represented by another name, for example, a retention periodicity, a storage periodicity, or storage duration. A specific name of the retention period is not limited in this application. After data is stored to the access network device, the data is discarded after the retention period.

Based on the foregoing solution, the core network device can select, from the plurality of access network devices, an access network device that can cover the second area more quickly, to perform the S&F operation, to improve efficiency of communication between the core network device and the terminal device. Alternatively, the core network device can select, from the plurality of access network devices, an access network device that can retain the first information to page the terminal device, so that the access network device implements paging of the terminal device.

Optionally, in another implementation scenario of the foregoing embodiment, the method 300 further includes: The first access network device sends fifth information to the core network device, where the fifth information indicates that the first access network device has a store and forward capability.

Correspondingly, the method 300 further includes: The core network device receives the fifth information from the first access network device.

The fifth information may be understood as an S&F indicator or a trigger from the first access network device, and the fifth information may also be referred to as an S&F RAN indicator (or trigger). The fifth information may be sent when the first access network device is initially connected to the core network device. In this way, when the first access network device just sets up a connection to the core network device, the core network device may determine, based on the fifth information, whether the first access network device has the store and forward capability, and then determine whether to select the first access network device to perform the S&F operation.

Further, that the core network device determines, based on the ephemeris information, to page the terminal device via the first access network device may include: The core network device determines, based on the ephemeris information and the fifth information, to page the terminal device via the first access network device.

That is, when determining the first access network device, the core network device considers whether the access network device can cover the second area, and further considers whether the access network device has the store and forward capability. When the access network device can cover the second area and has the store and forward capability, the core network device may determine the access network device as the first access network device.

In an example, after the core network device determines, based on the ephemeris information and the fifth information, to page the terminal device via the first access network device, the core network device may send the second information to the first access network device. In this way, the core network device may indicate, by using the second information, the first access network device to perform the S&F operation.

In another example, the access network device having the store and forward capability may be configured to automatically perform the S&F operation. In this way, after the core network device determines, based on the ephemeris information and the fifth information, to page the terminal device via the first access network device, the core network device does not need to send the second information to the first access network device, and only needs to send the first information to the first access network device, so that the first access network device can be triggered to page the terminal device, and the first access network device can also be triggered to perform the S&F operation. In other words, when the access network device having the store and forward capability is configured to automatically perform the S&F operation, the core network device may directly page the terminal device via the first access network device. The access network device configured to automatically perform the S&F operation may also be referred to as an S&F-exclusive (exclusive) RAN.

Based on the foregoing solution, the access network device may report, to the core network device, information indicating that the access network device has the store and forward capability. In this way, when selecting an access network device to perform the S&F operation, the core network device may consider whether the access network device has the store and forward capability, to avoid selecting an access network device that does not have the store and forward capability to perform the S&F operation, and increase the success rate of paging the terminal device by the core network device via the access network device.

It should be noted that the core network device may not determine, based on the information reported by the access network device, whether the access network device has the store and forward capability, and the core network device may alternatively obtain, in another manner, information indicating whether the access network device has the store and forward capability.

Optionally, in another implementation scenario of the foregoing embodiment, the method 300 further includes: The first access network device sends sixth information to the core network device, where the sixth information indicates storage space of the first access network device.

Correspondingly, the method 300 further includes: The core network device receives the sixth information from the first access network device.

That the first access network device sends the sixth information to the core network device may be understood as that the first access network device reports the storage space of the first access network device to the core network device. The storage space may be remaining storage space of the first access network device. A specific form in which the sixth information indicates the storage space is not limited in this application. The sixth information may indicate the storage space in a form of an absolute value, or may indicate the storage space in a form of a relative value. For example, it is assumed that total space of the first access network device is 100 MB, and the remaining storage space is 20 MB. When the storage space is indicated in a form of an absolute value, the sixth information may indicate 20 MB. When the storage space is indicated in a form of a relative value, the sixth information may indicate 20% or one fifth. The sixth information may indicate the storage space in another form.

Further, that the core network device determines, based on the ephemeris information, to page the terminal device via the first access network device may include: The core network device determines, based on the ephemeris information and the sixth information, to page the terminal device via the first access network device.

That is, when determining the first access network device, the core network device considers whether the access network device can cover the second area, and further considers storage space of the access network device. When the access network device can cover the second area and has the storage space that meets a store and forward requirement, the core network device may determine the access network device as the first access network device.

Further, the sixth information may further indicate that the first access network device has the store and forward capability. In other words, the sixth information may also have a function of the fifth information. Alternatively, when the access network device reports the storage space to the core network device, the core network device determines that the access network device has the store and forward capability. In other words, when the core network device receives the information indicating the storage space from the access network device, the core network device considers that the access network device has the store and forward capability. Therefore, the core network device may send the second information to the first access network device, and indicate, by using the second information, the first access network device to perform the S&F operation. Alternatively, when the access network device having the store and forward capability is configured to automatically perform the S&F operation, the core network device may directly page the terminal device via the first access network device.

Based on the foregoing solution, the access network device may report the storage space of the access network device to the core network device. In this way, when selecting the access network device to perform the S&F operation, the core network device may consider the storage space of the access network device, to avoid selecting an access network device with insufficient storage space to perform the S&F operation, and increase the success rate of paging the terminal device by the core network device via the access network device.

Optionally, in another implementation scenario of the foregoing embodiment, before S310, the method 300 further includes: The core network device determines that the storage space is capable of storing the data to be sent to the terminal device.

The data to be sent to the terminal device may include the first information, the second paging message (the RRC message generated by the access network device based on the first information), or the downlink data to be sent by the core network device to the terminal device. It should be noted that the data to be sent to the terminal device may further include other data.

That the storage space is capable of storing the data to be sent to the terminal device may be that a size of the storage space is greater than or equal to a size of the data to be sent to the terminal device, or may be that a size of space available to the terminal device in the storage space is greater than or equal to a size of the data to be sent to the terminal device.

In an example, the core network device may determine, based on the size of the storage space and the size of the data to be sent to the terminal device, whether the storage space is capable of storing the data to be sent to the terminal device. For example, if the storage space is 20 MB, and the size of the data to be sent to the terminal device is 5 MB, the core network device may determine whether the storage space is capable of storing the data to be sent to the terminal device.

In another example, the core network device may determine, based on the storage space, the size of the data to be sent to the terminal device, and a quota indicated by quota (quota) information, whether the storage space is capable of storing the data to be sent to the terminal device. The quota information indicates maximum space that can be occupied by the data to be sent to the terminal device on the access network device.

The quota information may be configured based on the granularity of the access network device. In other words, one or more pieces of quota information are configured for each access network device. In this way, the core network device may determine, based on configuration information of the access network device, maximum space that can be occupied by each terminal device on the access network device. Alternatively, the quota information may be configured based on the granularity of the terminal device. In other words, one or more pieces of quota information may be configured for each terminal device. In this way, the core network device may determine, based on configuration information (for example, subscription information) of a terminal device, maximum space that can be occupied by the terminal device on the access network device.

When the storage space of the access network device is greater than or equal to the size of the data to be sent to the terminal device, and the quota of the terminal device is greater than or equal to the size of the data to be sent to the terminal device, the core network device may determine to perform the S&F operation via the access network device. For example, if the storage space of the access network device is 20 MB, the size of the data to be sent to the terminal device is 5 MB, and the quota of the terminal device is 6 MB, the core network device may determine to perform the S&F operation via the access network device. For another example, if the storage space of the access network device is 20 MB, the size of the data to be sent to the terminal device is 5 MB, and the quota of the terminal device is 5 MB, the core network device may determine to perform the S&F operation via the access network device.

When the storage space of the access network device is less than the size of the data to be sent to the terminal device, the core network device may not perform the S&F operation via the access network device. For example, if the storage space of the access network device is 4 MB, the size of the data to be sent to the terminal device is 5 MB, and the quota of the terminal device is 6 MB, the core network device may not perform the S&F operation via the access network device. Although the quota of the terminal device is capable of storing the data to be sent to the terminal device, the storage space of the access network device is too small. Therefore, the access network device cannot perform the S&F operation.

When the quota of the terminal device is less than the size of the data to be sent to the terminal device, the core network device may not perform the S&F operation via the access network device. For example, if the storage space of the access network device is 20 MB, the size of the data to be sent to the terminal device is 5 MB, and the quota of the terminal device is 4 MB, the core network device may not perform the S&F operation via the access network device. Although the storage space of the access network device is capable of storing the data to be sent to the terminal device, the quota of the terminal device is too small. Therefore, the access network device cannot perform the S&F operation.

It may be understood that the foregoing two cases in which the core network device may not perform the S&F operation via the access network device may be combined. To be specific, when the storage space of the access network device is less than the size of the data to be sent to the terminal device, and the quota of the terminal device is less than the size of the data to be sent to the terminal device, the core network device may not perform the S&F operation via the access network device.

Based on the foregoing solution, when the core network device determines that the storage space of the access network device is capable of storing the data to be sent to the terminal device, the core network device pages the terminal device via the access network device. In the foregoing solution, the core network device does not select an access network device that cannot perform the S&F operation to perform the S&F operation, to increase the success rate of paging the terminal device by the core network device via the access network device.

Optionally, in another implementation scenario of the foregoing embodiment, the method 300 further includes: The first access network device receives fourth information from the core network device, where the fourth information indicates a quantity of times and/or paging duration of paging the terminal device by the first access network device when the first access network device covers the second area.

Further, S320 may include: The first access network device pages the terminal device based on the first information and the fourth information when the first access network device covers the second area.

Correspondingly, the method 300 further includes: The core network device sends the fourth information to the first access network device.

Further, the first access network device may page the terminal device based on the quantity of paging times and/or the paging duration that are/is indicated by the fourth information.

The quantity of paging times may be understood as a maximum quantity of times that the first access network device pages the terminal device when covering the second area. If the first access network device successfully pages the terminal device within the quantity of paging times indicated by the fourth information, the first access network device may stop paging. For example, the fourth information indicates that the quantity of paging times is 10. When covering the second area, the first access network device needs to page the terminal device 10 times based on the fourth information and the first information. If the first access network device successfully pages the terminal device for the fifth time, the first access network device does not need to perform remaining five times of paging. If the quantity of paging times indicated by the fourth information is reached, and the first access network device still does not successfully page the terminal device, the first access network device stops paging. For example, if the first access network device pages the terminal device 10 times and all paging fails, the first access network device does not page the terminal device again. In other words, the first access network device pages the terminal device a maximum of 10 times. That is, the maximum quantity of times that the first access network device pages the terminal device is the quantity of paging times indicated by the fourth information.

The quantity of paging times may also be understood as a fixed quantity of times that the first access network device pages the terminal device when covering the second area. For example, the fourth information indicates that the quantity of paging times is 10. When covering the second area, the first access network device needs to page the terminal device 10 times based on the fourth information and the first information. Regardless of whether the paging succeeds or fails, the first access network device pages the terminal device 10 times when covering the second area.

The paging duration may be understood as maximum duration for which the first access network device pages the terminal device when covering the second area. If the first access network device successfully pages the terminal device within the paging duration indicated by the fourth information, the first access network device may stop paging. For example, the fourth information indicates that the paging duration is 5 minutes. The first access network device pages the terminal device for 5 minutes based on the fourth information and the first information when covering the second area. If paging succeeds when the first access network device pages the terminal device for 3 minutes, the first access network device does not need to perform paging for remaining 2 minutes. If the paging duration indicated by the fourth information is reached, and the first access network device still does not successfully page the terminal device, the first access network device stops paging. For example, if the first access network device pages the terminal device for 5 minutes and all paging fails, the first access network device does not page the terminal device again. In other words, the first access network device pages the terminal device for a maximum of 5 minutes. That is, the maximum duration for which the first access network device pages the terminal device is the paging duration indicated by the fourth information.

The paging duration may also be understood as fixed duration for which the first access network device pages the terminal device when covering the second area. For example, the fourth information indicates that the paging duration is 5 minutes. When covering the second area, the first access network device needs to page the terminal device for 5 minutes based on the fourth information and the first information. Regardless of whether the paging succeeds or fails, the first access network device pages the terminal device for 5 minutes when covering the second area.

The fourth information may indicate only the quantity of paging times or the paging duration, or may indicate the quantity of paging times and the paging duration. The foregoing two understanding solutions of the quantity of paging times and the foregoing two understanding solutions of the paging duration may be combined arbitrarily. For example, for a combination solution in which the quantity of paging times is understood as a fixed quantity of times and the paging duration is understood as fixed duration, if the fourth information indicates that the quantity of paging times is 10 and the paging duration is 5 minutes, when covering the second area, the first access network device pages the terminal device for 5 minutes based on the fourth information and the first information, and specifically pages the terminal device 10 times within 5 minutes.

In addition, the paging duration may be understood as a time window (also referred to as duration), or may be understood as a time period. For example, 5 minutes in the foregoing example may be a time window, and the fourth information indicates only the time window of 5 minutes, and does not indicate a start moment or an end moment of the 5 minutes. For another example, 5 minutes in the foregoing example may be a time period, and the fourth information indicates a time window of 5 minutes, and further indicates a start moment or an end moment of the 5 minutes.

In an implementation, the core network device may determine the fourth information based on the ephemeris information of the first access network device and the identifier of the second area.

For example, the core network device may calculate, based on an orbit altitude and a moving speed of the first access network device, that flight duration of the first access network device passing through the TA list is 5 minutes. In this case, the core network device may determine that the paging duration is 5 minutes. Alternatively, the core network device may determine, based on an orbit altitude and a moving speed of the first access network device, that the first access network device can page a terminal device in the TA through 10 times of paging in a flight process of covering the TA.

In a solution in which the paging duration is understood as the time window, the core network device may determine that the paging duration is 5 minutes, and the first access network device determines a specific moment as a start moment of the 5 minutes. For example, the first access network device may determine a moment at which the TA is just covered as the start moment of the 5 minutes. In this way, the fourth information sent by the core network device to the first access network device may indicate 5 minutes. In a solution in which the paging duration is understood as the time period, the core network device may determine that the paging duration is 5 minutes, and determine a start moment of the 5 minutes. For example, the core network device may determine, based on the ephemeris information of the first access network device and the identifier of the second area, that a moment at which the first access network device just covers the TA is 8:00. In this case, the core network device may determine that the start moment of the 5 minutes is 8:00. In this way, the fourth information sent by the core network device to the first access network device may indicate 8:00 to 8:05.

Based on the foregoing solution, the core network device may indicate the quantity of times and/or the paging duration of paging the terminal device by the access network device when the access network device covers the second area. In this way, the access network device can page the terminal device based on the quantity of paging times and/or the paging duration, to increase the success rate of paging the terminal device by the access network device.

FIG. 4 is a schematic flowchart of another communication method 400 according to an embodiment of this application. According to the method 400, efficiency of data transmission between a core network device and a terminal device can be improved. It should be noted that the method 400 may be combined with any embodiment of the method 300. The following describes the embodiment of the method 400 with reference to FIG. 4.

S410: A first access network device receives first data from a core network device, where the first data is data that is received by the first access network device before paging of a terminal device is completed and that is to be sent to the terminal device, the first access network device covers a first area, the terminal device is located in a second area, and the first area is different from the second area. Correspondingly, the core network device sends the first data to the first access network device before paging of the terminal device is completed, where a current coverage area of the first access network device is the first area, and the first data is sent by the first access network device to the terminal device when the first access network device covers the second area.

The first data may be any data. The first data is not limited in this application. The first data is data sent by the core network device to the terminal device via the first access network device. Therefore, the first data may also be referred to as downlink data.

For example, the first access network device receives an RRC connection setup complete (RRC connection setup complete) message from the terminal device, to indicate that the first access network device completes paging of the terminal device. For another example, the first access network device sends an RRC connection setup (RRC connection setup) message to the terminal device, to indicate that the first access network device completes paging of the terminal device. For still another example, the first access network device sets up an RRC connection to the terminal device, to indicate that the first access network device completes paging of the terminal device.

For meanings of other technical terms in S410, refer to the embodiment related to S310. Details are not described herein again.

It should be noted that, in some related technical solutions, the first data is received by the first access network device after paging of the terminal device is completed. In this way, the first access network device completes paging of the terminal device when covering the second area for the first time, then receives the first data, and sends the first data to the terminal device when covering the second area for the second time. It can be learned that in a related technical solution, efficiency of data transmission between the core network device and the terminal device is low.

In an embodiment in which the method 400 is combined with the method 300, the first data may be carried in first information, or the first data and the first information may be carried in one piece of signaling. In some other embodiments, the first data and second data may be carried in different signaling respectively.

In some other embodiments, when storage space of the first access network device is insufficient to receive the first data, the first access network device does not receive the first data from the core network device. Further, the first access network device may send cause information to the core network device, where the cause information indicates that the first data fails to be cached because the storage space of the first access network device is insufficient. Correspondingly, the core network device may receive the cause information from the first access network device.

Further, in some embodiments, the core network device may determine, based on the cause information, to send the first information to the first access network device. That is, S310 is performed. In this way, the core network device cannot send the downlink data to the terminal device via the first access network device because the storage space of the first access network device is insufficient, but may page the terminal device via the first access network device. After paging of the terminal device is completed, the terminal device may send uplink data to the core network device via the first access network device.

Further, in some other embodiments, the core network device may re-determine the first access network device based on the cause information. For example, there is a RAN #1 in S410. When storage space of the RAN #1 is insufficient to receive first data, the RAN #1 may send cause information to the core network device. The core network device may determine, based on the cause information, another access network device (assumed to be a RAN #2) to perform S410. In addition, the core network device may further determine that the RAN #2 to perform S310.

If storage space of the RAN #2 is also insufficient, and the RAN #2 also sends a cause message to the core network device, the core network device may determine, based on the cause message, the RAN #2 to perform S310, or re-determine another access network device (for example, a RAN #3) to perform S410.

If storage space of the RAN #3 is also insufficient, and the RAN #3 also sends a cause message to the core network device, the core network device may determine a behavior of the RAN #3 (for example, the foregoing processing on the RAN #2) based on the cause message. If the RAN #3 does not send the cause message to the core network device, or the RAN #3 sends an acknowledgment message to the core network device, the core network device may continue to perform S420. In this way, the RAN #3 serves as the following first access network device.

In some embodiments, the core network device may simultaneously perform S310 and S410. In other words, the core network device may simultaneously send the first information and the first data to the first access network device. Alternatively, a difference between a moment at which S310 is performed and a moment at which S410 is performed is less than a preset threshold, and the preset threshold may be related to ephemeris information of the first access network device. For example, shorter duration for which the first access network device covers the first area indicates a smaller preset threshold.

In some other embodiments, the core network device may perform S410 after S310 and before the first access network device leaves the first area (or does not cover the first area, or disconnects a feeder connection to the core network device). In other words, the core network device may send the first data to the first access network device after sending the first information to the first access network device and before the first access network device leaves the first area (or does not cover the first area, or disconnects the feeder connection to the core network device). In other words, the core network device may send the first information to the first access network device when the first access network device covers the first area for an N^{th} time (or has the feeder connection to the core network device), and the core network device may send the first data to the first access network device when the first access network device covers the first area for the N^{th} time (or has the feeder connection to the core network device).

S420: The first access network device sends the first data to the terminal device after paging of the terminal device is completed and when the first access network device covers the second area.

For meanings of the technical terms in S420, refer to the embodiment related to S320. Details are not described herein again.

In some embodiments, the core network device may send indication information when S410 and S310 are performed, where the indication information indicates that the first information is associated with the first data. For example, the first information may carry the indication information, and the first data may carry the indication information. In this way, the first access network device may determine that the first information and the first data that carry the same indication information are associated. For another example, the indication information may include an identifier of the first information and an identifier of the first data. In this way, the first access network device may determine, based on the identifiers in the indication information, that the first information is associated with the first data. That the first information is associated with the first data may be understood as that a terminal device corresponding to the first information is the same as a terminal device corresponding to the first data, and the to-be-paged terminal device corresponding to the first information is a terminal device to which the first data is to be sent. Specific content of the indication information is not limited in this application. For example, the indication information may be a random number or other content.

In an example, in a process of paging a plurality of terminal devices based on the first information, the first access network device may send the indication information to the terminal device corresponding to the first information in the plurality of terminal devices. In a process of responding to the paging performed by the first access network device, the terminal device corresponding to the first information may send the indication information to the first access network device. In this way, the first access network device may determine, based on the received indication information, that the indication information corresponds to the first data, and send the first data to the terminal device that sends the indication information.

In another example, in a process of paging a plurality of terminal devices based on the first information, the first access network device may send the identifier of the first information to the terminal device corresponding to the first information in the plurality of terminal devices. In a process of responding to the paging performed by the first access network device, the terminal device corresponding to the first information may send the identifier of the first information to the first access network device. In this way, the first access network device may determine, based on the received identifier of the first information and the indication information, that the identifier of the first information corresponds to the identifier of the first data, to determine that data to be sent to the terminal device that sends the identifier of the first information is the first data; and
determine, from the plurality of terminal devices, a terminal device corresponding to the indication information, and send the first data to the terminal device.

Based on the foregoing solution, the core network device may send, to the access network device before paging of the terminal device is completed, downlink data to be sent to the terminal device, so that the access network device sends the downlink data to the terminal device as soon as possible after paging of the terminal device is completed, to improve efficiency of data transmission between the core network device and the terminal device.

Optionally, in another implementation scenario of the foregoing embodiment, the method 400 further includes: The first access network device receives second data from the terminal device. The first access network device sends the second data to the core network device when the first access network device covers the first area. Correspondingly, the method 400 further includes: The core network device receives the second data from the first access network device.

Based on the foregoing solution, the access network device may receive uplink data from the terminal device, and transmit the uplink data to the core network device when the access network device covers the first area. In the foregoing solution, the terminal device performs uplink transmission via the access network device.

In some embodiments, the terminal device may receive the first data from the first access network device and send the second data to the first access network device simultaneously. In other words, the first access network device may send the first data to the terminal device and receive the second data from the terminal device simultaneously. In other words, the terminal device and the first access network device may simultaneously transmit the first data and the second data. Alternatively, a difference between a moment at which the first data is transmitted and a moment at which the second data is transmitted is less than a preset threshold, and the preset threshold may be related to the ephemeris information of the first access network device. For example, shorter duration for which the first access network device covers the second area indicates a smaller preset threshold.

In some other embodiments, the terminal device may send the second data to the first access network device after S420 and before the first access network device leaves the second area (or does not cover the second area, or disconnects a service connection from the terminal device). In other words, the terminal device may send the second data to the first access network device after paging of the terminal device is completed and before the first access network device leaves the second area (or does not cover the second area, or disconnects the service connection to the terminal device). In other words, the first access network device may send the first data to the terminal device when the first access network device covers the second area for an N^{th} time (or has the service connection to the terminal device), and the terminal device may send the second data to the first access network device when the first access network device covers the second area for the N^{th} time (or has the service connection to the terminal device).

In some embodiments, when sending the second data to the first access network device, the terminal device may further send current ULI to the first access network device. The current ULI indicates location information of the terminal device when the terminal device sends the second data. Then, the first access network device may send the current ULI to the core network device when covering the first area. In this way, when the core network device needs to page the terminal device or needs to send data to the terminal device next time, the core network device may determine the first access network device based on the current ULI, so that the first access network device can cover the current ULI, or can more quickly move to a location that can cover the current ULI, to optimize next paging or data transmission. Further, the core network device may update location information in a context (context) of the terminal device to the current ULI.

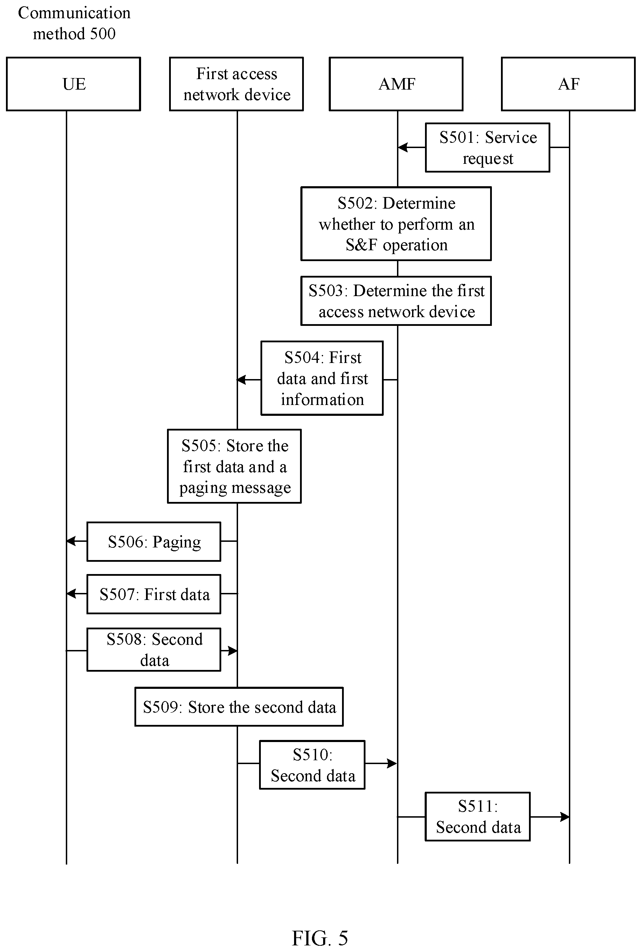

FIG. 5 is a schematic flowchart of still another communication method 500 according to an embodiment of this application. The method 500 is an implementation of a combination of the method 300 and the method 400, and does not constitute a limitation on this application. It should be noted that an AMF in FIG. 5 may be replaced with an MME. In other words, this embodiment of this application is applicable to a 5G network, a 4G network, and another communication system. The following describes the method 500 in detail with reference to FIG. 5.

S501: The AMF receives a service request from an AF, where the service request indicates to transmit downlink data to UE.

For example, the service request may include an identifier (for example, a SUPI or a SUCI) of the UE, first data, and second information.

In some embodiments, the AF may send a service request to a NEF, and the NEF sends the service request to the AMF. For example, the AF sends the service request to the NEF by invoking a non-IP data delivery (non-IP data delivery, NIDD) service (service) through an Nnef service interface, and the NEF sends the service request to the AMF by invoking a message transfer (message transfer) service through an Namf service interface. The message transfer service may be a communication (communication) service between an N1 service interface and an N2 service interface, and the message transfer service may be used as a new service type. In this way, the NEF does not need to establish a session, and indexes to an SMF via the session, and the SMF sends data to the AMF. Therefore, the foregoing solution improves communication efficiency.

S502: The AMF determines whether to perform an S&F operation on the UE.

For example, the AMF may determine, based on configuration information of the UE, whether the S&F operation needs to be performed (that is, the method 300 is performed) on the UE, or whether an on-board (on-board) store and forward operation needs to be used for the UE.

The configuration information includes subscription information, a RAT, or other information of the UE. For example, when the subscription information of the UE indicates that the terminal device subscribes to an S&F service, or indicates that the S&F operation needs to be used for the terminal device, the AMF determines that the S&F operation needs to be performed on the UE. For another example, when the RAT of the UE is an S&F RAT, the AMF determines that the S&F operation needs to be performed on the UE.

It should be noted that, in the method 500, S501 may not be performed, and S502 is directly performed.

S503: The AMF determines a first access network device.

For example, the AMF may determine the first access network device from a plurality of access network devices based on location information of the terminal device (also referred to as information about a second area) and ephemeris information of the plurality of access network devices, where the first access network device is configured to perform the S&F operation.

The location information of the terminal device may include ULI. It is assumed that the ULI includes a TA #1, a TA #2, and a TA #3. In other words, the second area in which the terminal device is located may be the TA #1, the TA #2, or the TA #3. In other words, when the access network device covers any one of the TA #1, the TA #2, or the TA #3, the access network device can page or send data to the terminal device. Table 1 shows determining performed by a core network device on a plurality of access network devices.

**Table 1**

| Access network device | Supported TA | First area -> second area | Determining |
|---|---|---|---|
| RAN #1 | TA #1 and TA #2 | 3^{rd} | Second preferred |
| RAN #2 | TA #1, TA #2, and TA #3 | 2^{nd} | Preferred |
| RAN #3 | TA #4 | 1^{st} | Not selected |

Table 1 shows information about three access network devices. The RAN #3 supports only the TA #4, or in other words, the RAN #3 cannot cover any one of the TA #1, the TA #2, or the TA #3. Therefore, the core network device does not select the RAN #3 as the first access network device. "First area -> second area" indicates a speed or duration for which the access network device moves from the first area to the second area. A faster speed or shorter duration indicates a higher ranking. Refer to Table 1. Duration for the RAN #3 to move from the first area to the second area is the shortest, duration for the RAN #1 to move from the first area to the second area is the longest, and duration for the RAN #2 to move from the first area to the second area is between that of the RAN #1 and that of the RAN #3. "First area -> second area" may also be understood as a sequence in which a trajectory of the access network device passes through an area in which the AMF is located and an area indicated by the ULI.

Because the duration for the RAN #2 to move from the first area to the second area is shorter than the duration for the RAN #1 to move from the first area to the second area, the AMF may preferentially select the RAN #2 as the first access network device. When the RAN #2 is not suitable for serving as the first access network device in another case, the AMF may select the RAN #1 as the first access network device. For example, storage space of the RAN #2 is too small to perform the S&F operation, and the AMF may select the RAN #1 as the first access network device.

The AMF may determine the foregoing "supported TA" based on an NG setup (setup) request sent by the access network device, and the AMF may determine the foregoing "first area -> second area" based on ephemeris information of the access network device.

In some embodiments, the AMF may further determine, based on ephemeris information of the first access network device and the location information of the terminal device, a quantity of times and/or paging duration of paging the terminal device when the first access network device covers the second area. For details, refer to the embodiment of the method 300. Details are not described herein again.

S504: The AMF sends a first information and the first data to the first access network device. That is, S310 and S410 are performed. For details, refer to the embodiments of the method 300 and the method 400. Details are not described herein again.

The first data sent by the AMF to the first access network device may be carried in a non-access stratum (non-access stratum, NAS) message. In this way, the first access network device cannot learn of specific content of the first data, to improve data transmission security.

Table 2 shows an implementation of the first information. Table 2 is merely an example, and does not constitute a limitation on this application.

**Table 2**

| Information element or group name | Presence form |
|---|---|
| Message type | M |
| UE paging identity | M |
| TA list for paging | M |
| ULI | O |
| S&F indicator | O |

The information element (information element, IE) or the group name (group name) includes a plurality of elements. For the message type (message type), the UE paging identity (paging identity), and the TA list for paging (TA list for paging), refer to existing descriptions. Details are not described herein. The ULI may indicate the first access network device to page the terminal device when covering the area (that is, the second area) indicated by the ULI. The ULI may also be considered as the location information of the terminal device. The ULI may include at least one of a TAI list, a cell ID, or geographical location information. The S&F indicator may be configured to indicate the first access network device to perform the S&F operation on the first information. If the presence form is mandatory (mandatory, M), it indicates that the IE or the group name must be present in the first information; and if the presence form is optional (optional, O), it indicates that the IE or the group name may be present in the first information. The foregoing is merely an example, and does not constitute a limitation on this application.

In some embodiments, the method 500 further includes: The AMF sends, to the first access network device, information indicating the quantity of paging times and/or the paging duration. That is, the AMF sends fourth information to the first access network device.

In some embodiments, the method 500 further includes: The first access network device sends an S&F RAN indicator to the AMF in an NG setup process. In other words, when the first access network device is initially connected to the AMF, the first access network device reports the S&F RAN indicator to the AMF. In this way, the first information may not include the S&F indicator, and the AMF considers that the first access network device is configured to perform the S&F operation by default.

S505: The first access network device stores the first data, and stores a paging message.

The paging message may be the first information (a first paging message) or a second paging message (an RRC message generated based on the first information).

In some embodiments, when storage space of the first access network device is insufficient to receive the first data, the first access network device does not receive the first data from the core network device. Further, the first access network device may send cause information to the core network device, where the cause information indicates that the first data fails to be cached because the storage space of the first access network device is insufficient. Correspondingly, the core network device may receive the cause information from the first access network device. For details, refer to the embodiment of the method 400. Details are not described herein again.

S506: The first access network device pages the UE based on the first information. That is, S320 is performed.

For example, the first access network device may broadcast the second paging message when covering the second area. The second paging message may carry an identifier of the UE.

S507: The first access network device sends the first data to the UE after paging of the UE is completed. That is, S420 is performed.

For example, the first access network device may send the first data to the UE via an RRC connection. The first data may be carried in a NAS message.

S510 to S570 in the method describes a solution in which the core network device pages the UE via the first access network device and transmits the downlink data to the UE. The following describes an uplink transmission solution.

S508: The UE sends second data to the first access network device.

For example, the UE may send the second data to the first access network device via a service request connection. The second data may be carried in a NAS message.

In some embodiments, the method 500 further includes: The UE sends current ULI to the first access network device. The second data and the current ULI may be carried in a same message, or may be carried in different messages. This is not limited in this application. In some embodiments, the method 500 further includes: The UE sends the identifier of the UE to the first access network device. The second data and the identifier of the UE may be carried in a same message, or may be carried in different messages. This is not limited in this application.

S509: The first access network device stores the second data.

In some embodiments, the method 500 further includes: The first access network device further stores the current ULI or the identifier of the UE.

S510: The first access network device sends the second data to the AMF when covering the first area.

In other words, the first access network device sends the second data to the AMF when the first access network device is connected to a feeder link. The second data may be carried in a NAS message.

In some embodiments, the method 500 further includes: The first access network device further sends the current ULI or the identifier of the UE to the AMF. In some embodiments, the method 500 further includes: The AMF may update the current ULI to the location information in the context of the UE.

S511: The AMF sends the second data to the AF.

In some embodiments, the method 500 further includes: The AMF sends the identifier of the UE to the AF. For example, the AMF may invoke a message transfer service through an Namf service interface to send a feedback message to the AMF. The feedback message includes the second data, and the feedback message may further include the identifier of the UE. The message transfer service may be a communication service between an N1 service interface and an N2 service interface, and the message transfer service may be used as a new service type. The NEF may invoke an NIDD service through an Nnef service interface to send the feedback message to the AF.

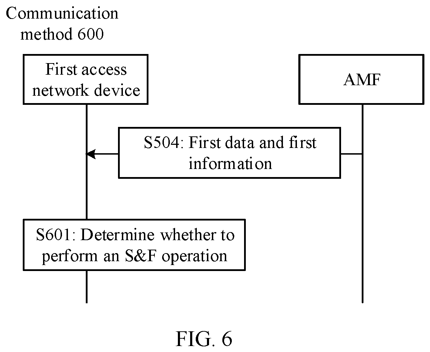

FIG. 6 is a schematic flowchart of still another communication method 600 according to an embodiment of this application. The method 600 is another implementation of a combination of the method 300 and the method 400, and does not constitute a limitation on this application. It should be noted that an AMF in FIG. 6 may be replaced with an MME. In other words, this embodiment of this application is applicable to a 5G network, a 4G network, and another communication system. The following describes the method 600 in detail with reference to FIG. 6.

S504: The AMF sends a first information and first data to a first access network device. A difference from the embodiment of S504 in the method 500 is that the first information in the method 600 does not include an S&F indicator. Another part of this embodiment is similar to the embodiment of S504 in the method 500, and details are not described herein again.

S601: The first access network device determines whether to perform an S&F operation. For details, refer to the first access network device determining whether the S&F operation needs to be performed in the method 300. Details are not described herein again.

A difference between the method 600 and the method 500 is that in the method 600, the AMF does not determine and indicate the first access network device to perform the S&F operation, but the first access network device autonomously determines to perform the S&F operation.

In some embodiments, the method 600 further includes S505 to S511.

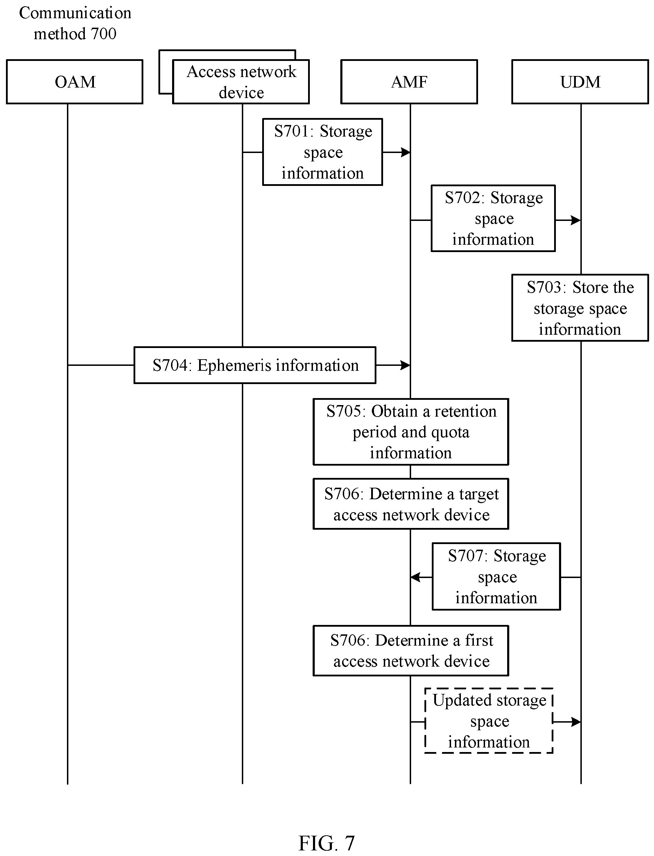

FIG. 7 is a schematic flowchart of a method 700 for determining a first access network device according to an embodiment of this application. The method 700 may be combined with at least one of the method 300, the method 400, the method 500, or the method 600. It should be noted that an AMF in FIG. 7 may be replaced with an MME, and a UDM may be replaced with an HSS. In other words, this embodiment of this application is applicable to a 5G network, a 4G network, and another communication system. The following describes the embodiment of the method 700 with reference to FIG. 7.

S701: A plurality of access network devices separately send storage space information to the AMF. It may be understood that storage space information sent by one of the plurality of access network devices to the AMF indicates remaining storage space of the access network device. There may be one or more AMFs. When there are a plurality of AMFs, the access network device sends the storage space information to the corresponding AMF.

S702: The AMF sends the storage space information to the UDM.

S703: The UDM stores the storage space information. It may be understood that the UDM may manage the storage space information. There may be the plurality of AMFs. Therefore, the UDM can be used to centrally manage the storage space information.

S704. The AMF receives ephemeris information from operation, administration and maintenance (operation administration and maintenance, OAM). The ephemeris information may be ephemeris information of a constellation, and access network devices connected over an ISL may be considered as a constellation.

S705: The AMF obtains retention period and quota information. For example, the retention period and the quota information may be in configuration information of UE, and the AMF obtains the retention period and the quota information by using the configuration information of the UE.

S706: The AMF determines a target access network device based on the ephemeris information and the retention period. For a meaning of the retention period, refer to the embodiment of the method 300. Details are not described herein again.

For example, the AMF determines, based on the ephemeris information and the retention period, a satellite path that can cover a second area within the retention period. At least one target access network device runs on the satellite path. The at least one target access network device is connected to each other over an ISL.

In some embodiments, the AMF may separately send information about the satellite path to the target access network device. The information about the satellite path indicates an identifier of the at least one target access network device and a sequence in which the at least one target access network device transmits data to each other over the ISL. The identifier of the at least one target access network device may be a satellite identifier, or may be an identifier of a gNB on board. In this way, the at least one target access network device can transmit first information, first data, or second data to each other based on the information about the satellite path.

S707: The AMF receives the storage space information from the UDM. In other words, the AMF obtains or queries the storage space information from the UDM.

S708: The AMF determines a first access network device based on the storage space information and the quota information.

It may be understood that the AMF may determine the first access network device from the target access network device based on the storage space information and the quota information. Storage space corresponding to the first access network device is greater than the quota information. When there are a plurality of first access network devices, storage space corresponding to each of these first access network devices is greater than the quota information.

The plurality of access network devices transmit data to each other over the ISL. A 1^{st} access network device that receives data may be referred to as a first-hop access network device, and a last access network device that receives data may be referred to as a last-hop access network device. The last-hop access network device sends the data to a terminal device or a core network device.

After S708, the method 700 further includes: The AMF sends updated storage space information to the UDM. The updated storage space information is obtained by subtracting the quota information from storage space not updated in the last-hop access network device.

It should be noted that the UDM may also be referred to as a UDR.

According to the foregoing solution, the core network device can more accurately determine the first access network device, to increase a success rate of communication between the core network device and the terminal device via the first access network device.

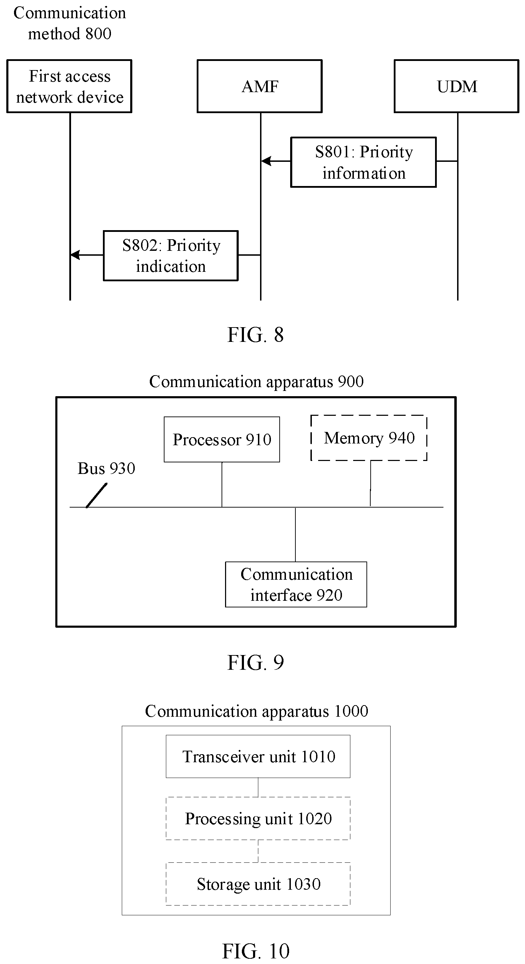

FIG. 8 is a schematic flowchart of still another communication method 800 according to an embodiment of this application. The method 800 may be combined with at least one of the method 300, the method 400, the method 500, the method 600, or the method 700. It should be noted that an AMF in FIG. 8 may be replaced with an MME, and a UDM may be replaced with an HSS. In other words, this embodiment of this application is applicable to a 5G network, a 4G network, and another communication system. The following describes the embodiment of the method 800 with reference to FIG. 8.

S801: The AMF receives priority information from the UDM.

For example, the priority information may be obtained from configuration information (such as subscription information) of UE. The priority information may indicate a priority of forwarding data to the UE. The priority information may also be understood as indicating an S&F forwarding priority (forwarding priority).

For example, UE that is more sensitive to an execution latency and a packet loss rate may correspond to priority information with a higher priority.

S802: The AMF sends a priority indication to a first access network device.

The priority indication may indicate a priority of forwarding data by the first access network device to the UE.

For example, the priority indication may be carried in an N3 data packet and sent to the first access network device. In other words, the priority indication and downlink data may be carried in one piece of signaling. For another example, the priority indication may be sent by using separate signaling. In other words, the priority indication and downlink data may be decoupled, and are not sent in same signaling.

In some embodiments, the AMF may determine, based on the priority information, whether to perform S802. In other words, even if the priority indicated by the priority information is high, the AMF may determine not to send the priority indication to the first access network device, so that UE corresponding to the priority information cannot obtain a higher data forwarding priority.

In some embodiments, after the first access network device receives the priority indication from the AMF, if storage space of the first access network device is insufficient, the first access network device may not receive data with a low priority. In other words, the first access network device may reject the data with the low priority.

The following describes apparatus embodiments corresponding to the method embodiments of this application. The following briefly describes only apparatuses. For specific implementation steps and details of the solutions, refer to the foregoing method embodiments.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 9 is a block diagram of a communication apparatus 900 according to an embodiment of this application. The communication apparatus 900 includes a processor 910 and a communication interface 920. The processor 910 and the communication interface 920 may be connected to each other through a bus 930. The communication apparatus 900 may be a core network device, or may be an access network device.

Optionally, the communication apparatus 900 may further include a memory 940. The memory 940 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 940 is configured to store related instructions and data. The memory 940 may be integrated with the processor 910, or may be disposed separately.

The processor 910 may be one or more central processing units (central processing unit, CPU). When the processor 910 is one CPU, the CPU may be a single-core CPU, or may be a multicore CPU. The processor 910 may be a signal processor, a chip, or another integrated circuit that can implement the method in this application, or a part of a circuit configured to perform a processing function in the foregoing processor, chip, or integrated circuit. In addition, the communication interface 920 may alternatively be an input/output interface. The input/output interface is configured to input or output a signal or data, or may be an input/output circuit.

When the communication apparatus 900 is a core network device, for example, the processor 910 is configured to perform the following operation: sending first information to a first access network device, where a current coverage area of the first access network device is a first area, the first information is used to trigger the first access network device to page a terminal device, the terminal device is located in a second area, and the first information is used by the first access network device to page the terminal device when the first access network device covers the second area.

When the communication apparatus 900 is an access network device, for example, the processor 910 is configured to perform the following operations: receiving first information from a core network device, where the access network device covers a first area, the first information is used to trigger the access network device to page a terminal device, the terminal device is located in a second area, and the first area is different from the second area; and paging the terminal device based on the first information when the access network device covers the second area.

When the communication apparatus 900 is a core network device, for example, the processor 910 is configured to perform the following operation: sending first data to a first access network device before paging of a terminal device is completed, where the first data is data to be sent to the terminal device, a current coverage area of the first access network device is a first area, the terminal device is located in a second area, and the first area is different from the second area; and the first data is sent by the first access network device to the terminal device when the first access network device covers the second area.

When the communication apparatus 900 is an access network device, for example, the processor 910 is configured to perform the following operations: receiving first data from a core network device, where the first data is data that is received by the access network device before paging of a terminal device is completed and that is to be sent to the terminal device, the access network device covers a first area, the terminal device is located in a second area, and the first area is different from the second area; and sending the first data to the terminal device after paging of the terminal device is completed and when the access network device covers the second area.

The foregoing content is merely used as an example for description. When the communication apparatus 900 is a core network device or an access network device, the communication apparatus 900 is responsible for performing the method or step related to the core network device or the access network device in the foregoing method embodiments.

It may be understood that when the communication apparatus 900 is a core network device or an access network device, the communication interface 920 may also be referred to as a transceiver. The transceiver may include a transmitter and a receiver. The transmitter is configured to perform a sending operation, and the receiver is configured to perform a receiving operation. For example, the processor 910 is configured to control the transceiver to receive and/or send a signal.

It should be noted that the communication apparatus 900 may include the transmitter but not include the receiver. Alternatively, the communication apparatus 900 may include the receiver but not include the transmitter. This may be specifically determined depending on whether the foregoing solution performed by the communication apparatus 900 includes a sending action and a receiving action.

The foregoing descriptions are merely an example for description. For specific content, refer to the content shown in the foregoing method embodiments. For an implementation of the operations in FIG. 9, refer to the corresponding descriptions of the method embodiments shown in FIG. 3 to FIG. 8.

For example, the communication apparatus 900 may be configured to perform the solution shown in FIG. 3 or FIG. 4.

When the communication apparatus 900 is a core network device, the communication interface 920 is configured to send first information to a first access network device.

When the communication apparatus 900 is an access network device, the communication interface 920 is configured to receive first information from a core network device; and the processor 910 is configured to page a terminal device based on the first information when the access network device covers a second area.

When the communication apparatus 900 is a core network device, the communication interface 920 is configured to send first data to the first access network device before paging of a terminal device is completed.

When the communication apparatus 900 is an access network device, the communication interface 920 is configured to receive first data from the core network device; and the processor 910 is configured to send the first data to the terminal device after paging of the terminal device is completed and when the access network device covers the second area.

For details of other implementations, refer to the detailed descriptions of the embodiment shown in FIG. 3 or FIG. 4. Details are not described herein again. It should be understood that a specific process in which the components perform the foregoing corresponding process has been described in detail in the foregoing method embodiments. For brevity, details are not described herein again.

FIG. 10 is a block diagram of another communication apparatus 1000 according to an embodiment of this application. The communication apparatus 1000 may be a core network device or an access network device, or may be a chip or a module in the core network device or the access network device, and is configured to implement the methods in the embodiments shown in FIG. 3 to FIG. 8. For details, refer to the related descriptions in the foregoing method embodiments.

The communication apparatus 1000 includes a transceiver unit 1010. The following describes the transceiver unit 1010 by using an example.

The transceiver unit 1010 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. A unified description is provided herein, and details are not described below again. The transceiver unit 1010 may implement a corresponding communication function. The transceiver unit 1010 may also be referred to as a communication interface or a communication module.

It should be noted that the communication apparatus 1000 may include the sending unit but not include the receiving unit. Alternatively, the communication apparatus 1000 may include the receiving unit but not include the sending unit. This may be specifically determined depending on whether the foregoing solution performed by the communication apparatus 1000 includes a sending action and a receiving action.

When the communication apparatus 1000 is a core network device, for example, the transceiver unit 1010 is configured to send first information and the like to a first access network device.

Optionally, the communication apparatus 1000 may further include a processing unit 1020, configured to perform content related to steps such as processing and coordination of the core network device.

When the communication apparatus 1000 is an access network device, for example, the transceiver unit 1010 is configured to receive first information and the like from a core network device.

Optionally, the communication apparatus 1000 may further include a processing unit 1020, configured to perform content related to steps such as processing and coordination of the access network device.

When the communication apparatus 1000 is a core network device, for example, the transceiver unit 1010 is configured to send first data and the like to the first access network device.

Optionally, the communication apparatus 1000 may further include a processing unit 1020, configured to perform content related to steps such as processing and coordination of the core network device.

When the communication apparatus 1000 is an access network device, for example, the transceiver unit 1010 is configured to receive first data and the like from the core network device.

Optionally, the communication apparatus 1000 may further include a processing unit 1020, configured to perform content related to steps such as processing and coordination of the access network device.

The foregoing content is merely used as an example for description. When the communication apparatus 1000 is a core network device or an access network device, the communication apparatus 1000 is responsible for performing the method or step related to the core network device or the access network device in the foregoing method embodiments.

Optionally, the communication apparatus 1000 further includes a storage unit 1030. The storage unit 1030 is configured to store a program or code used for performing the foregoing method. In other words, the storage unit 1030 may be configured to store instructions and/or data, and the processing unit 1020 may read the instructions and/or the data in the storage unit 1030, so that the communication apparatus 1000 implements the foregoing method embodiments. For example, the communication apparatus 1000 may be configured to perform the solution shown in FIG. 3 or FIG. 4.

When the communication apparatus 1000 is a core network device, the transceiver unit 1010 is configured to send first information to a first access network device, where a current coverage area of the first access network device is a first area, the first information is used to trigger the first access network device to page a terminal device, the terminal device is located in a second area, and the first information is used by the first access network device to page the terminal device when the first access network device covers the second area.

When the communication apparatus 1000 is an access network device, the transceiver unit 1010 is configured to receive first information from a core network device, where the access network device covers a first area, the first information is used to trigger the access network device to page a terminal device, the terminal device is located in a second area, and the first area is different from the second area; and the processing unit 1020 is configured to page the terminal device based on the first information when the access network device covers the second area.

When the communication apparatus 1000 is a core network device, the transceiver unit 1010 is configured to send first data to a first access network device, where the first data is data to be sent to a terminal device, a current coverage area of the first access network device is a first area, the terminal device is located in a second area, the first area is different from the second area, and the first data is sent by the first access network device to the terminal device when the first access network device covers the second area.

When the communication apparatus 1000 is an access network device, the transceiver unit 1010 is configured to receive first data from a core network device, where the first data is data that is received by the access network device before paging of a terminal device is completed and that is to be sent to the terminal device, the access network device covers a first area, the terminal device is located in a second area, and the first area is different from the second area; and the processing unit 1020 is configured to send the first data to the terminal device after paging of the terminal device is completed and when the access network device covers the second area.

For details of other implementations, refer to the detailed descriptions of the embodiment shown in FIG. 3 or FIG. 4. Details are not described herein again. It should be understood that a specific process in which the components perform the foregoing corresponding process has been described in detail in the foregoing method embodiments. For brevity, details are not described herein again.

The apparatus embodiments shown in FIG. 9 and FIG. 10 are used to implement the content in FIG. 3 to FIG. 8. For specific execution steps and methods of the apparatuses shown in FIG. 9 and FIG. 10, refer to the content in the foregoing method embodiments.

This application further provides an apparatus 1100. The apparatus 1100 may be a core network device, a processor in the core network device, or a chip. The apparatus 1100 may be configured to perform the operations performed by the core network device in the foregoing method embodiments.

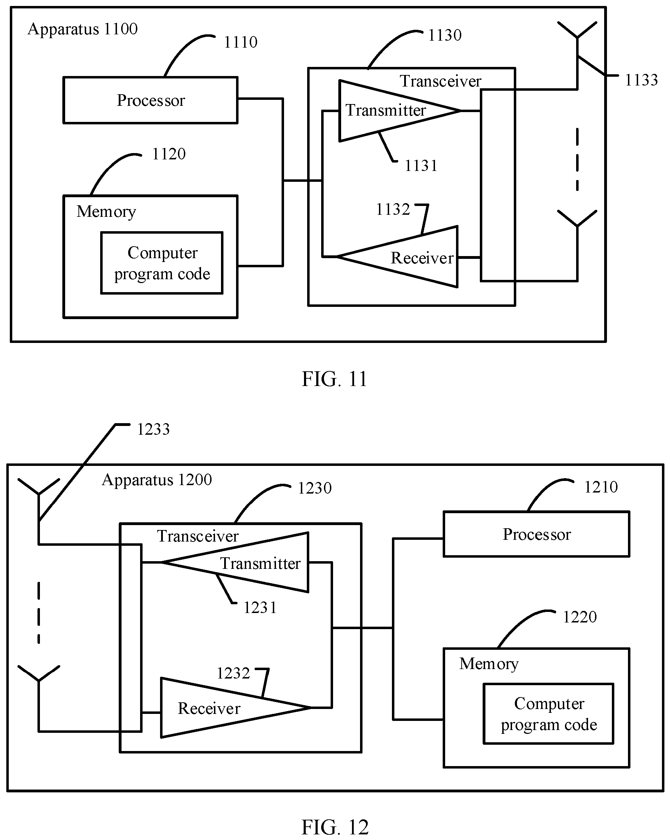

When the apparatus 1100 is a core network device, FIG. 11 is a simplified diagram of a structure of a core network device. As shown in FIG. 11, the core network device includes a processor, a memory, and a transceiver. The memory may store computer program code, and the transceiver includes a transmitter 1131, a receiver 1132, a radio frequency circuit (not shown in the figure), and an antenna 1133.

The processor is mainly configured to process a communication protocol and communication data, control the core network device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

When data needs to be sent, the processor outputs the baseband signal to the radio frequency circuit after performing baseband processing on the to-be-sent data. Then, the radio frequency circuit performs radio frequency processing on the baseband signal, and then sends a radio frequency signal to the outside in a form of an electromagnetic wave through the antenna. When data is sent to the core network device, the radio frequency circuit receives a radio frequency signal through the antenna. The radio frequency circuit converts the radio frequency signal into the baseband signal, and outputs the baseband signal to the processor. The processor converts the baseband signal into data, and processes the data. For ease of description, FIG. 10 shows only one memory, one processor, and one transceiver. In an actual product of the core network device, there may be one or more processors and one or more memories. The memory may also be referred to as a storage medium, a storage device, or the like. The memory may be disposed independent of the processor, or may be integrated with the processor. This is not limited in this embodiment of this application.

The part 1110 and the part 1120 may include one or more boards, and each board may include one or more processors and one or more memories. The processor is configured to read and execute a program in the memory to implement a baseband processing function and control the apparatus 1100. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

In this embodiment of this application, the antenna and the radio frequency circuit that have a transceiver function may be considered as a transceiver module of the core network device, and the processor that has a processing function may be considered as a processing module of the core network device.

As shown in FIG. 11, the core network device includes a processor 1110, a memory 1120, and a transceiver 1130. The processor 1110 may also be referred to as a processing unit, a processing board, a processing module, a processing apparatus, or the like. The transceiver 1130 may also be referred to as a transceiver unit, a transceiver machine, a transceiver apparatus, or the like.

Optionally, a component configured to implement a receiving function in the transceiver 1130 is considered as a receiving module, and a component configured to implement a sending function in the transceiver 1130 is considered as a sending module. That is, the transceiver 1130 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

The processor 1110 is configured to perform a processing action on a core network device side in the embodiment shown in FIG. 3 or FIG. 4. The transceiver 1130 is configured to perform receiving and sending actions on the core network device side in the embodiment shown in FIG. 3 or FIG. 4.

When the apparatus 1100 is a chip, the chip includes a processor, a memory, and a transceiver. The transceiver may be an input/output circuit or a communication interface. The processor may be a processing module, a microprocessor, or an integrated circuit integrated on the chip. The sending operation of the core network device in the foregoing method embodiments may be understood as an output of the chip, and the receiving operation of the core network device in the foregoing method embodiments may be understood as an input of the chip.

This application further provides an apparatus 1200. The apparatus 1200 may be an access network device, or may be a chip of the access network device. The apparatus 1200 may be configured to perform the operations performed by the access network device in the embodiments shown in FIG. 3 to FIG. 8.

FIG. 12 is a simplified diagram of a structure. The apparatus 1200 includes a part 1210, a part 1220, and a part 1230.

The part 1210 is mainly used for baseband processing and the like. The part 1210 is usually a control center of the apparatus 1200, and may be usually referred to as a processor, and is configured to control the apparatus 1200 to perform a processing operation on an access network device side in the foregoing method embodiments.

The part 1220 is mainly configured to store computer program code and data.

The part 1230 is mainly configured to: receive or send a radio frequency signal, and perform conversion between the radio frequency signal and a baseband signal. The part 1230 may be usually referred to as a transceiver module, a transceiver machine, a transceiver circuit, a transceiver, or the like. The transceiver module in the part 1230 may also be referred to as a transceiver machine, a transceiver, or the like, and includes an antenna 1233 and a radio frequency circuit (not shown in the figure). The radio frequency circuit is mainly configured to perform radio frequency processing. Optionally, in the part 1230, a component configured to implement a receiving function may be considered as a receiver, and a component configured to implement a sending function may be considered as a transmitter. In other words, the part 1230 includes a receiver 1232 and a transmitter 1231. The receiver may also be referred to as a receiving module, a receiver machine, a receiver circuit, or the like, and the transmitter may be referred to as a transmitting module, a transmitter machine, a transmitter circuit, or the like.

The part 1210 and the part 1220 may include one or more boards, and each board may include one or more processors and one or more memories. The processor is configured to read and execute a program in the memory to implement a baseband processing function and control the apparatus 1200. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

For example, in an implementation, the transceiver module in the part 1230 is configured to perform a receiving/sending-related process performed by the access network device in the embodiment shown in FIG. 3 or FIG. 4. The processor in the part 1210 is configured to perform a processing-related process performed by the access network device in the embodiment shown in FIG. 3 or FIG. 4.

When the apparatus 1200 is a chip, the chip includes a transceiver, a memory, and a processor. The transceiver may be an input/output circuit or a communication interface. The processor is a processor, a microprocessor, or an integrated circuit integrated on the chip. The sending operation of the access network device in the foregoing method embodiments may be understood as an output of the chip, and the receiving operation of the access network device in the foregoing method embodiments may be understood as an input of the chip.

This application further provides a communication apparatus, including a processor and a memory. The memory is configured to store instructions, and the processor is configured to invoke and run the instructions stored in the memory, so that the communication apparatus performs the method of the access network device, the core network device, or the terminal device in the foregoing embodiments.

This application further provides a chip, including a processor, configured to invoke instructions from a memory and run the instructions stored in the memory, to enable a communication apparatus on which the chip is installed to perform the methods in the foregoing embodiments.

This application further provides another chip, including an input interface, an output interface, and a processor. The input interface, the output interface, and the processor are connected to each other through an internal connection path. The processor is configured to execute code in a memory. When the code is executed, the processor is configured to perform the methods in the foregoing embodiments. Optionally, the chip further includes the memory. The memory is configured to store a computer program or the code.

This application further provides a processor, configured to be coupled to a memory, and configured to perform a method and a function related to the core network device or the access network device in any one of the foregoing embodiments.

Another embodiment of this application provides a computer program product including a computer program or instructions. When the computer program product runs on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

This application further provides a communication system. The communication system may include a first access network device and a core network device. The first access network device may be configured to perform the operations performed by the access network device in the embodiments shown in FIG. 3 to FIG. 8, and the core network device may be configured to perform the operations performed by the core network device in the embodiments shown in FIG. 3 to FIG. 8.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by an access network device, first information from a core network device, wherein the access network device covers a first area, the first information is used to trigger the access network device to page a terminal device, the terminal device is located in a second area, and the first area is different from the second area; and
paging, by the access network device, the terminal device based on the first information when the access network device covers the second area.

2. The method according to claim 1, wherein the first information comprises an identifier of the terminal device and an identifier of the second area.

3. The method according to claim 1 or 2, further comprising:
sending, by the access network device, first data to the terminal device after paging of the terminal device is completed and when the access network device covers the second area, wherein the first data is data that is received by the access network device before paging of the terminal device is completed and that is to be sent to the terminal device.

4. The method according to any one of claims 1 to 3, further comprising:
receiving, by the access network device, second data from the terminal device; and
sending, by the access network device, the second data to the core network device when the access network device covers the first area.

5. The method according to any one of claims 1 to 4, wherein the second area is a tracking area, a cell, or a geographical area.

6. The method according to any one of claims 1 to 5, further comprising:
receiving, by the access network device, second information from the core network device, wherein the second information indicates to page the terminal device when the access network device covers the second area; and
the paging, by the access network device, the terminal device based on the first information when the access network device covers the second area comprises:
paging, by the access network device, the terminal device based on the first information and the second information when the access network device covers the second area.

7. The method according to any one of claims 1 to 5, further comprising:
determining, by the access network device based on third information, to page the terminal device when the access network device covers the second area, wherein the third information comprises information about the second area; and
the paging, by the access network device, the terminal device based on the first information when the access network device covers the second area comprises:
paging, by the access network device, the terminal device based on the first information and the third information when the access network device covers the second area.

8. The method according to any one of claims 1 to 5, further comprising:
receiving, by the access network device, fourth information from the core network device, wherein the fourth information indicates a quantity of times and/or paging duration of paging the terminal device by the access network device when the access network device covers the second area; and
the paging, by the access network device, the terminal device based on the first information when the access network device covers the second area comprises:
paging, by the access network device, the terminal device based on the first information and the fourth information when the access network device covers the second area.

9. The method according to any one of claims 1 to 8, further comprising:
sending, by the access network device, fifth information to the core network device, wherein the fifth information indicates that the access network device has a store and forward capability.

10. The method according to any one of claims 1 to 9, further comprising:
sending, by the access network device, sixth information to the core network device, wherein the sixth information indicates storage space of the access network device.

11. A communication method, comprising:
sending, by a core network device, first information to a first access network device, wherein a current coverage area of the first access network device is a first area;
the first information is used to trigger the first access network device to page a terminal device, and the terminal device is located in a second area; and
the first information is used by the first access network device to page the terminal device when the first access network device covers the second area.

12. The method according to claim 11, wherein the first information comprises an identifier of the terminal device and an identifier of the second area.

13. The method according to claim 11 or 12, further comprising:
sending, by the core network device, first data to the first access network device before paging of the terminal device is completed, wherein the first data is data to be sent to the terminal device.

14. The method according to any one of claims 11 to 13, further comprising:
receiving, by the core network device, second data from the first access network device.

15. The method according to any one of claims 11 to 14, wherein the second area is a tracking area, a cell, or a geographical area.

16. The method according to any one of claims 11 to 15, further comprising:
sending, by the core network device, second information to the first access network device, wherein the second information indicates to page the terminal device when the first access network device covers the second area.

17. The method according to claim 16, further comprising:
determining, by the core network device based on configuration information of the terminal device, to send the second information to the first access network device.

18. The method according to any one of claims 11 to 17, wherein before the sending, by the core network device, the first information to the first access network device in a first time period, the method further comprises:
determining, by the core network device based on ephemeris information, to page the terminal device via the first access network device.

19. The method according to claim 18, wherein the determining, by the core network device based on the ephemeris information, to page the terminal device via the first access network device comprises:
determining, by the core network device based on the ephemeris information, that duration for which the first access network device moves from the first area to the second area is less than or equal to a duration threshold; and
determining, by the core network device, to page the terminal device via the first access network device.

20. The method according to claim 19, wherein
the duration threshold is duration for which a second access network device moves from the first area to the second area, the second access network device is one of a plurality of access network devices whose current coverage area is the first area, and the first access network device is one of the plurality of access network devices; and
the duration threshold is duration for which the first access network device retains the first information.

21. The method according to any one of claims 11 to 20, further comprising:
sending, by the core network device, fourth information to the first access network device, wherein the fourth information indicates a quantity of times and/or paging duration of paging the terminal device by the first access network device when the first access network device covers the second area.

22. The method according to any one of claims 11 to 21, further comprising:
receiving, by the core network device, fifth information from the first access network device, wherein the fifth information indicates that the first access network device has a store and forward capability.

23. The method according to any one of claims 11 to 22, further comprising:
receiving, by the core network device, sixth information from the first access network device, wherein the sixth information indicates storage space of the first access network device.

24. The method according to claim 23, wherein before the sending, by the core network device, the first information to the first access network device, the method further comprises:
determining, by the core network device, that the storage space is capable of storing the data to be sent to the terminal device.

25. A communication method, comprising:
receiving, by an access network device, first data from a core network device, wherein the first data is data that is received by the access network device before paging of a terminal device is completed and that is to be sent to the terminal device, the access network device covers a first area, the terminal device is located in a second area, and the first area is different from the second area; and
sending, by the access network device, the first data to the terminal device after paging of the terminal device is completed and when the access network device covers the second area.

26. The method according to claim 25, further comprising:
receiving, by the access network device, first information from the core network device, wherein the first information is used to trigger the access network device to page the terminal device; and
paging, by the access network device, the terminal device based on the first information when the access network device covers the second area.

27. The method according to claim 26, wherein the first information comprises an identifier of the terminal device and an identifier of the second area.

28. The method according to any one of claims 25 to 27, further comprising:
receiving, by the access network device, second data from the terminal device; and
sending, by the access network device, the second data to the core network device when the access network device covers the first area.

29. The method according to any one of claims 25 to 28, wherein the second area is a tracking area, a cell, or a geographical area.

30. The method according to claim 26 or 27, further comprising:
receiving, by the access network device, second information from the core network device, wherein the second information indicates to page the terminal device when the access network device covers the second area; and
the paging, by the access network device, the terminal device based on the first information when the access network device covers the second area comprises:
paging, by the access network device, the terminal device based on the first information and the second information when the access network device covers the second area.

31. The method according to claim 26 or 27, further comprising:
determining, by the access network device based on third information, to page the terminal device when the access network device covers the second area, wherein the third information comprises information about the second area; and
the paging, by the access network device, the terminal device based on the first information when the access network device covers the second area comprises:
paging, by the access network device, the terminal device based on the first information and the third information when the access network device covers the second area.

32. The method according to claim 26 or 27, further comprising:
receiving, by the access network device, fourth information from the core network device, wherein the fourth information indicates a quantity of times and/or paging duration of paging the terminal device by the access network device when the access network device covers the second area; and
the paging, by the access network device, the terminal device based on the first information when the access network device covers the second area comprises:
paging, by the access network device, the terminal device based on the first information and the fourth information when the access network device covers the second area.

33. The method according to any one of claims 25 to 32, further comprising:
sending, by the access network device, fifth information to the core network device, wherein the fifth information indicates that the access network device has a store and forward capability.

34. The method according to any one of claims 25 to 33, further comprising:
sending, by the access network device, sixth information to the core network device, wherein the sixth information indicates storage space of the access network device.

35. A communication method, comprising:
sending, by a core network device, first data to a first access network device before paging of a terminal device is completed, wherein the first data is data to be sent to the terminal device, a current coverage area of the first access network device is a first area, the terminal device is located in a second area, and the first area is different from the second area; and
the first data is sent by the first access network device to the terminal device when the first access network device covers the second area.

36. The method according to claim 35, further comprising: sending, by the core network device, first information to the first access network device, wherein the first information is used to trigger the first access network device to page the terminal device, and the first information is used by the first access network device to page the terminal device when the first access network device covers the second area.

37. The method according to claim 36, wherein the first information comprises an identifier of the terminal device and an identifier of the second area.

38. The method according to any one of claims 35 to 37, further comprising:
receiving, by the core network device, second data from the first access network device.

39. The method according to any one of claims 35 to 38, wherein the second area is a tracking area, a cell, or a geographical area.

40. The method according to any one of claims 35 to 39, further comprising:
sending, by the core network device, second information to the first access network device, wherein the second information indicates to page the terminal device when the first access network device covers the second area.

41. The method according to claim 40, further comprising:
determining, by the core network device based on configuration information of the terminal device, to send the second information to the first access network device.

42. The method according to any one of claims 35 to 41, wherein before the sending, by the core network device, the first data to the first access network device, the method further comprises:
determining, by the core network device based on ephemeris information, to page the terminal device via the first access network device.

43. The method according to claim 42, wherein the determining, by the core network device based on the ephemeris information, to page the terminal device via the first access network device comprises:
determining, by the core network device based on the ephemeris information, that duration for which the first access network device moves from the first area to the second area is less than or equal to a duration threshold; and
determining, by the core network device, to page the terminal device via the first access network device.

44. The method according to claim 43, wherein
the duration threshold is duration for which a second access network device moves from the first area to the second area, the second access network device is one of a plurality of access network devices whose current coverage area is the first area, and the first access network device is one of the plurality of access network devices; and
the duration threshold is duration for which the first access network device retains the first data.

45. The method according to any one of claims 35 to 44, further comprising:
sending, by the core network device, fourth information to the first access network device, wherein the fourth information indicates a quantity of times and/or paging duration of paging the terminal device by the first access network device when the first access network device covers the second area.

46. The method according to any one of claims 35 to 45, further comprising:
receiving, by the core network device, fifth information from the first access network device, wherein the fifth information indicates that the first access network device has a store and forward capability.

47. The method according to any one of claims 35 to 46, further comprising:
receiving, by the core network device, sixth information from the first access network device, wherein the sixth information indicates storage space of the first access network device.

48. The method according to claim 47, wherein before the sending, by the core network device, the first data to the first access network device, the method further comprises:
determining, by the core network device, that the storage space is capable of storing the data to be sent to the terminal device.

49. A communication apparatus, comprising a processing circuit and an input/output interface, wherein the input/output interface is configured to input and/or output a signal, and the processing circuit is configured to perform the method according to any one of claims 1 to 10, or the processing circuit is configured to perform the method according to any one of claims 11 to 24, or the processing circuit is configured to perform the method according to any one of claims 25 to 34, or the processing circuit is configured to perform the method according to any one of claims 35 to 48.

50. A communication apparatus, comprising a processor, wherein the processor is configured to execute a computer program or instructions to perform the method according to any one of claims 1 to 10, or perform the method according to any one of claims 11 to 24, or perform the method according to any one of claims 25 to 34, or perform the method according to any one of claims 35 to 48.

51. The apparatus according to claim 50, further comprising a memory, wherein the memory is configured to store the computer program or the instructions.

52. A computer-readable storage medium, wherein the computer-readable storage medium stores a computer program or instructions, and when the computer program or the instructions are run, the method according to any one of claims 1 to 10 is performed, or the method according to any one of claims 11 to 24 is performed, or the method according to any one of claims 25 to 34 is performed, or the method according to any one of claims 35 to 48 is performed.

53. A computer program product, comprising a computer program or instructions, wherein when the computer program or the instructions are run, the method according to any one of claims 1 to 10 is implemented, or the method according to any one of claims 11 to 24 is implemented, or the method according to any one of claims 25 to 34 is implemented, or the method according to any one of claims 35 to 48 is implemented.

54. A communication system, comprising a first access network device and a core network device, wherein the first access network device is configured to perform the method according to any one of claims 1 to 10, and the core network device is configured to perform the method according to any one of claims 11 to 24; or the first access network device is configured to perform the method according to any one of claims 25 to 34, and the core network device is configured to perform the method according to any one of claims 35 to 48.

55. A communication apparatus, comprising at least one module or at least one unit, wherein the at least one module or the at least one unit is configured to perform the method according to any one of claims 1 to 10, or perform the method according to any one of claims 11 to 24, or perform the method according to any one of claims 25 to 34, or perform the method according to any one of claims 35 to 48.

56. A chip apparatus, comprising a processor, wherein the processor is configured to execute a computer program or instructions to perform the method according to any one of claims 1 to 10, or perform the method according to any one of claims 11 to 24, or perform the method according to any one of claims 25 to 34, or perform the method according to any one of claims 35 to 48.
